(19) Europäisches Patentamt
European Patent Office
Office européen des brevets

(11) Publication number : **0 476 928 A1**

(12) **EUROPEAN PATENT APPLICATION**

(21) Application number : **91308329.1**

(51) Int. Cl.$^5$ : **G03C 1/83,** // C09B23/00

(22) Date of filing : **12.09.91**

(30) Priority : **21.09.90 JP 252851/90**

(43) Date of publication of application :
**25.03.92 Bulletin 92/13**

(84) Designated Contracting States :
**DE FR GB IT NL**

(71) Applicant : **KONICA CORPORATION**
**26-2, Nishi-shinjuku 1-chome Shinjuku-ku**
**Tokyo (JP)**

(72) Inventor : **Kawashima, Yasuhiko**
**c/o KONICA CORPORATION, 1 Sakuramachi**
**Hino-shi, Tokyo (JP)**
Inventor : **Kagawa, Nobuaki**
**c/o KONICA CORPORATION, 1 Sakuramachi**
**Hino-shi, Tokyo (JP)**
Inventor : **Yamauchi, Reiko**
**c/o KONICA CORPORATION, 1 Sakuramachi**
**Hino-shi, Tokyo (JP)**
Inventor : **Kojima, Tamotsu**
**c/o KONICA CORPORATION, 1 Sakuramachi**
**Hino-shi, Tokyo (JP)**

(74) Representative : **Brock, Peter William et al**
**URQUHART-DYKES & LORD 91 Wimpole Street**
**London W1M 8AH (GB)**

(54) **Light-sensitive silver halide photographic material.**

(57) Disclosed is a light-sensitive silver halide photographic material which comprises containing a compound represented by the following formula (I) :

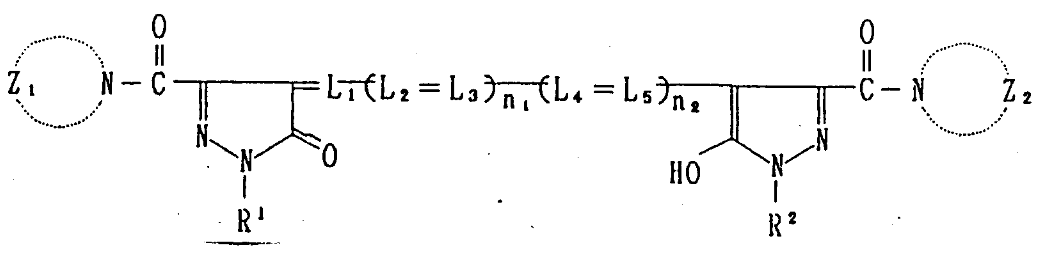

(I)

wherein $R^1$ and $R^2$ each represent hydrogen atom, an alkyl group, an aryl group, an alkenyl group or a heterocyclic group ; $Z_1$ and $Z_2$ each represent a group of non-metallic atoms for forming an aromatic heterocyclic ring ; $L_1$ to $L_5$ each represent a methine group ; and $n_1$ and $n_2$ each represent an integer of 0, 1 or 2.

EP 0 476 928 A1

## BACKGROUND OF THE INVENTION

This invention relates to a light-sensitive silver halide photographic material containing a dye, more particularly to a light-sensitive silver halide photographic material containing a hydrophilic colloid layer colored by a dye useful as a light absorbing dye.

There has been well known that dyes are contained in light-sensitive silver halide photographic materials for the purpose of absorbing light with a specific wavelength as a filter or in order to prevent halation and irradiation or control sensitivity, and hydrophilic colloid layers are colored by such dyes.

A filter layer is generally located at an upper layer of a light-sensitive emulsion layer or between emulsion layers, and changes an incident light reaching to the emulsion layer to a light having a preferred spectral composition. Further, for the purpose of improving sharpness of a photographic image, there have been frequently practiced that halation is prevented by providing an antihalation layer between an emulsion layer and a support or at the back surface of a support whereby absorbing a harmful reflected light at the interface of the emulsion layer and the support or at the back surface of the support, and that irradiation is prevented by coloring an emulsion layer and absorbing an harmful reflected light and a scattered light caused by silver halide grains.

The dye used for such purposes is required to satisfy various conditions that the dye exhibits good absorption spectrum characteristics depending on the purpose; the dye is decolorized completely during photographic development processing and easily eluted from a light-sensitive silver halide photographic material whereby there is no residual color stain of the dye after development processing; the dye does not exert bad influence such as fog and desensitization on a photographic emulsion; and the dye has excellent stability with the lapse of time in a solution or a light-sensitive silver halide photographic material without discoloration and fading.

Heretofore, in order to find a dye satisfying the above conditions, many researches have been made and many dyes have been proposed. For example, there have been known oxonol dyes disclosed in U.S. Patent No. 3,247,127, and Japanese Patent Publications No. 22069/1964 and No. 10059/1980.

However, a dye satisfying all the above conditions and having characteristics good enough to be used in a photographic material has not been found under existing circumstances.

Oxonol dyes of which 3-position is carbamoyl type have been disclosed in U.K. Patent No. 1,338,799, and Japanese Unexamined Patent Publications No. 77327/1976, No. 143342/1983, No. 111641/1984 and No. 139944/1988. Of these, the dyes disclosed in U.K. Patent No. 1,338,799 and Japanese Unexamined Patent Publication No. 77327/1976 are insoluble or hardly soluble in water since they have no water-soluble group in their molecular structures.

However, since photographic development processing is generally carried out within a short time under low alkaline conditions (low pH), these dyes are hardly eluted completely from a photographic material. Further, there are possibilities that a dye once decolorized is recolored with the lapse of time, and that a dye exerts bad photographic influence even if a decolorized dye is not recolored. Thus, particularly when a dye is used in a photographic material coated with many layers for the above purposes, the dye is desirably made a water-soluble dye by introducing a water-soluble group thereto. As a result, since a water-soluble dye is easily eluted during development processing, it will not remain in a photographic material.

For incorporating a dye in a photographic material, when a dye is water-soluble, there is an advantage that it can be added as an aqueous solution by dissolving in water. However, when a dye hardly soluble in water is used, an organic solvent should be necessarily used, which is not desirable also in the point of harmfulness.

The dyes disclosed in Japanese Unexamined Patent Publications No. 143342/1983, No. 111641/1984, No. 139944/1988 and No. 126646/1989 are oxonol dyes each having a water-soluble group and having carbamoyl group at the 3-position. However, these dyes are insufficient in characteristics, particularly bleaching property, and further improvements have been demanded.

In Japanese Unexamined Patent Publication No. 93534/1990, there is disclosed a dye having a heterocyclic ring at 3,3′-position of pyrazolone. However, in the above patent publication, there are few examples of a ring formed at 3,3′-position, and said few examples are limited to saturated rings such as morpholine, piperazine and piperidine which are entirely different from the aromatic ring of the present invention.

Further, the compounds in the above patent publication are also insufficient in characteristics such as bleaching property.

## SUMMARY OF THE INVENTION

The present inventors have studied intensively in order to solve some drawbacks of the above dyes and find a dye satisfying all the conditions of a light absorbing dye, and consequently found a light absorbing dye particularly excellent in decolorization and eluation abilities and photographic inactiveness when a dye having carbamoyl group forming an aromatic ring is used, to accomplish the present invention.

That is, an object of the present invention is to provide a light-sensitive silver halide photographic material containing a water-soluble dye having good spectral absorption characteristic, which is photographically inactive in a light-sensitive photographic material and easily decolorized and/or flown out during photographic development processing whereby stain after processing is extremely small.

The above object of the present invention can be accomplished by a light-sensitive silver halide photographic material which comprises containing a compound represented by the following formula (I):

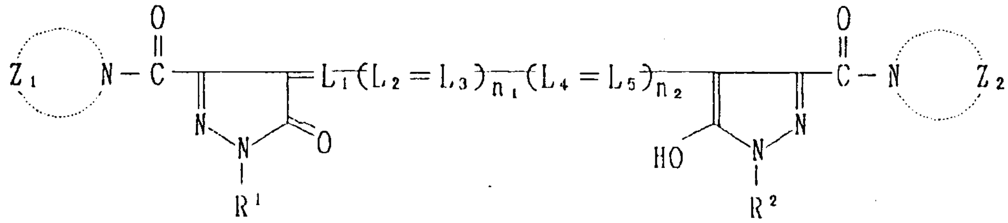

(I)

wherein $R^1$ and $R^2$ each represent hydrogen atom, an alkyl group, an aryl group, an alkenyl group or a heterocyclic group; $Z_1$ and $Z_2$ each represent a group of non-metallic atoms necessary for forming an aromatic heterocyclic ring; $L_1$ to $L_5$ each represent a methine group; and $n_1$ and $n_2$ each represent an integer of 0, 1 or 2.

## DESCRIPTION OF THE PREFERRED EMBODIMENTS

In the following, the present invention is explained in more detail.

The oxonol dye to be used in the present invention is represented by the formula (I), but the group represented by $R^1$ or $R^2$ in the formula may be further substituted or unsubstituted. Specific examples of $R^1$ and $R^2$ are described below.

As the alkyl group represented by $R^1$ or $R^2$, there may be mentioned, for example, methyl group, ethyl group, propyl group, isopropyl group, n-butyl group, tertiary butyl group, cyclopentyl group and cyclohexyl group. These alkyl groups may be further substituted by hydroxy group, cyano group, sulfo group, carboxyl group, a halogen atom (e.g. fluorine atom, chlorine atom and bromine atom), an alkoxy group (e.g. methoxy group and ethoxy group), an aryloxy group (e.g. phenoxy group, 4-sulfophenoxy group and 2,4-disulfophenoxy group), an aryl group (e.g. phenyl group, 4-sulfophenyl group and 2,5-disulfophenyl group), an alkoxycarbonyl group (e.g. methoxycarbonyl group and ethoxycarbonyl group), an aryloxycarbonyl group (e.g. phenoxycarbonyl group), a carbamoyl group (e.g. phenylcarbamoyl group and ethylcarbamoyl group), an amide group (e.g. anilinocarbonyl group and methylaminocarbonyl group), a sulfamoyl group (e.g. methylaminosulfone group and anilinosulfone group) and a sulfonamide group (e.g. methanesulfonamide group and benzenesulfonamide group).

As the aryl group represented by $R^1$ or $R^2$, there may be mentioned, for example, phenyl group, 2-methoxyphenyl group, 4 nitrophenyl group, 3-chlorophenyl group, 4-aminophenyl group, 4-hydroxyphenyl group, 4-methanesulfonylphenyl group, 4-sulfophenyl group, 3-sulfophenyl group, 2-sulfophenyl group, 2-methyl-4-sulfophenyl group, 2-chloro-4-sulfophenyl group, 4-chloro-3-sulfophenyl group, 2-chloro-5-sulfophenyl group, 2-methoxy-5-sulfophenyl group, 2-hydroxy-4-sulfophenyl group, 2,5-dichloro-4-sulfophenyl group, 2,6-diethyl-4-sulfophenyl group, 2,5-disulfophenyl group, 3,5-disulfophenyl group, 2,4-disulfophenyl group, 4-phenoxy-3-sulfophenyl group, 2-chloro-6-methyl-4-sulfophenyl group, 3-carboxy-2-hydroxy-5-sulfophenyl group, 4-carboxyphenyl group, 2,5-dicarboxyphenyl group, 3,5-dicarboxyphenyl group, 2,4-dicarboxyphenyl group, 3,6-disulfo-α-naphthyl group, 8-hydroxy-3,6-disulfo-α-naphthyl group, 5-hydroxy-7-sulfo-β-naphthyl group and 6,8-disulfo-β-naphthyl group.

The alkenyl group represented by $R^1$ or $R^2$ may include, for example, vinyl group and allyl group, and these groups may further have a substituent(s).

As the substituent, there may be included the same substituents as those mentioned for the above alkyl group and the alkyl groups.

As the heterocyclic group represented by $R^1$ or $R^2$, there may be included, for example, a pyridyl group (e.g. 2-pyridyl group, 3-pyridyl group, 4-pyridyl group, 5-sulfo-2-pyridyl group, 5-carboxy-2-pyridyl group, 3,5-dichloro-2-pyridyl group, 4,6-dimethyl-2-pyridyl group, 6-hydroxy-2-pyridyl group, 2,3,5,6-tetrafluoro-4-pyridyl group and 3-nitro-2-pyridyl group), an oxazolyl group (e.g. 5-sulfo-2-benzoxazolyl group, 2-benzoxazolyl group and 2-oxazolyl group), a thiazolyl group (e.g. 5-sulfo-2-benzthiazolyl group, 2-benzthiazolyl group and 2-thiazolyl group), an imidazolyl group (e.g. 1-methyl-2-imidazolyl group, 1-methyl-5-sulfo-2-benzimidazolyl group),

a furyl group (e.g. 3-furyl group), a pyrrolyl group (e.g. 3-pyrrolyl group), a thienyl group (e.g. 2-thienyl group), a pyrazinyl group (e.g. 2-pyrazinyl group), a pyrimidinyl group (e.g. 2-pyrimidinyl group and 4-chloro-2-pyrimidinyl group), a pyridazinyl group (e.g. 2-pyridazinyl group), a purinyl group (e.g. 8-purinyl group), an isoxazolinyl group (e.g. 3-isoxazolinyl group), a selenazolyl group (e.g. 5-sulfo-2-selenazolyl group), a sulforanyl group (e.g. 3-sulforanyl group), a piperidinyl group (e.g. 1-methyl-3-piperidinyl group), a pyrazolyl group (e.g. 3-pyrazolyl group) and a tetrazolyl group (e.g. 1-methyl-5-tetrazolyl group).

$Z_1$ and $Z_2$ each represent a group of non-metallic atoms necessary for forming an aromatic heterocyclic ring, and as the aromatic heterocyclic ring, there may be included, for example, a pyrrole ring, an imidazole ring, a pyrazol ring, an isoindole ring, an indole ring, an indazole ring, a purine ring, a carbazole ring, a carboline ring, a perimidine ring, a phenothiazine ring, a phenoxazine ring, a triazole ring, a benzimidazole ring and a benztriazole ring, and these rings may further have a substituent(s).

As the substituent, there may be included the same substituents as those mentioned for the above alkyl group of $R^1$ or $R^2$ and the alkyl groups.

In the formula (I), the methine groups represented by $L_1$ to $L_5$ may include those having a substituent(s), and as the substituent, there may be mentioned, for example, an alkyl group (e.g. methyl group, ethyl group, i-propyl group, t-butyl group, 3-hydroxypropyl group and benzyl group), an aryl group (e.g. phenyl group), a halogen atom (e.g. chlorine, bromine, iodine and fluorine atoms), an alkoxy group (e.g. methoxy group and ethoxy group) and an acyloxy group (e.g. methylcarbonyloxy group and phenylcarbonyloxy group).

In the present invention, it is more preferred that $R^1$ and $R^2$ each represent an alkyl group or a phenyl group, and the aromatic heterocyclic ring including $Z_1$ and $Z_2$ represents a pyrrole ring, an imidazole ring, a pyrazole ring or a triazole ring, and it is particularly preferred that $R^1$ and $R^2$ each represent a phenyl group.

Specific examples (called exemplary compounds in Examples) of the dye represented by the formula (I) to be used in the present invention are shown below, but the present invention is not limited to these dyes.

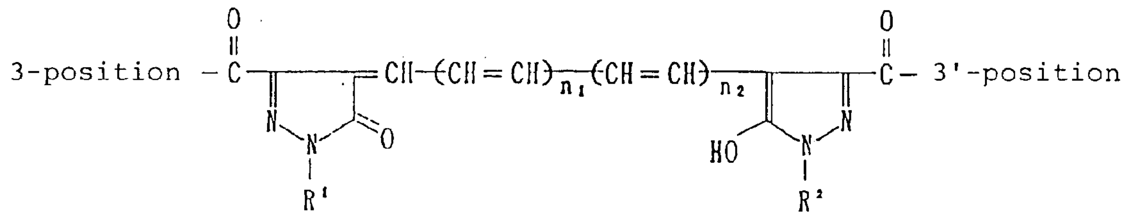

| No. | 3-position | 3'-position | $R^1$ | $R^2$ | $n_1$ | $n_2$ |
|---|---|---|---|---|---|---|
| 1 | 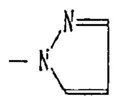 | 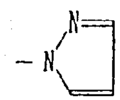 | 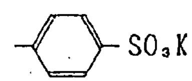 | 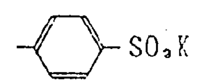 | 0 | 0 |
| 2 | 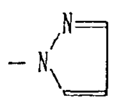 | 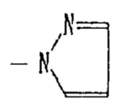 | 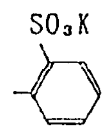 | 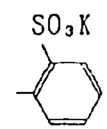 | 1 | 0 |
| 3 | 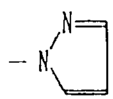 | 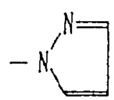 | 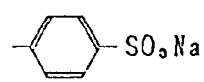 | 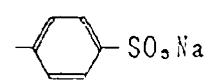 | 1 | 1 |
| 4 | 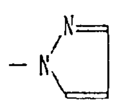 | 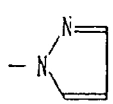 | 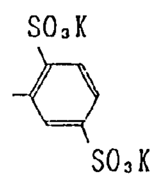 | 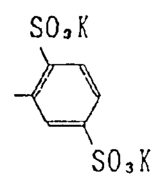 | 1 | 1 |

| No. | 3-position | 3'-position | $R^1$ | $R^2$ | $n_1$ | $n_2$ |
|---|---|---|---|---|---|---|
| 5 | 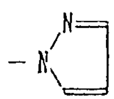 | 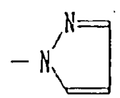 | 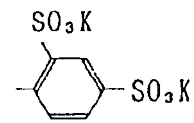 | 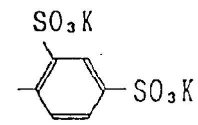 | 1 | 0 |
| 6 | 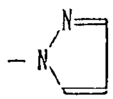 | 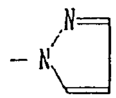 | 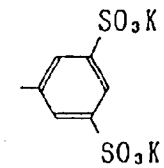 | 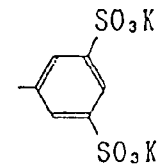 | 0 | 0 |
| 7 | 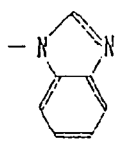 | 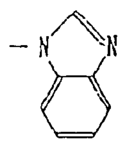 | 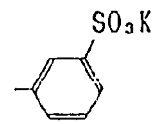 | 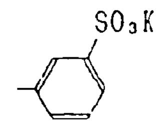 | 0 | 0 |
| 8 | 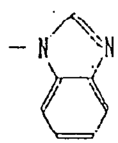 | 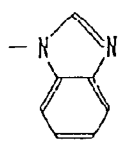 | 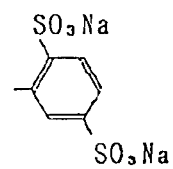 | 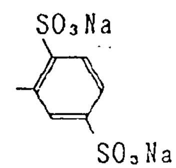 | 0 | 0 |

| No. | 3-position | 3'-position | $R^1$ | $R^2$ | $n_1$ | $n_2$ |
|---|---|---|---|---|---|---|
| 9 | 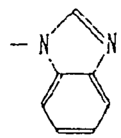 | 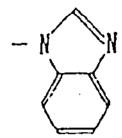 | 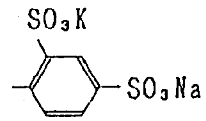 | 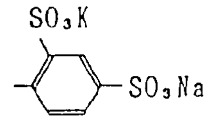 | 1 | 0 |
| 10 | 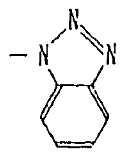 | 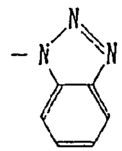 | 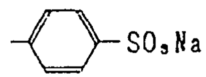 | 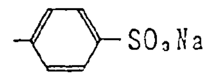 | 1 | 0 |
| 11 | 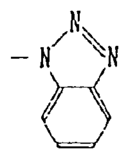 | 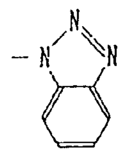 | 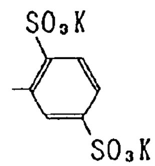 | 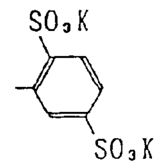 | 1 | 1 |
| 12 | 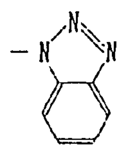 | 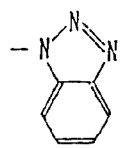 | 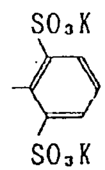 | 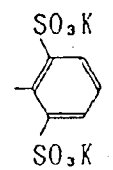 | 0 | 0 |

| No. | 3-position | 3'-position | $R^1$ | $R^2$ | $n_1$ | $n_2$ |
|---|---|---|---|---|---|---|
| 13 | 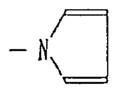 | 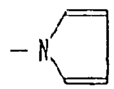 | 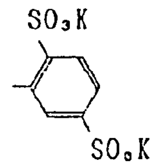 | 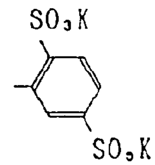 | 1 | 1 |
| 14 | 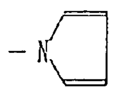 | 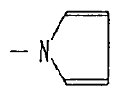 | 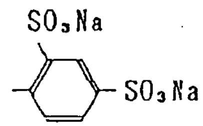 | 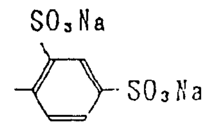 | 1 | 0 |
| 15 | 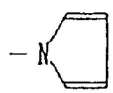 | 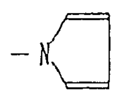 | 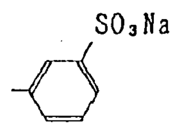 | 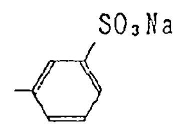 | 0 | 0 |
| 16 | 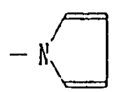 | 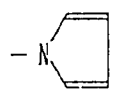 | 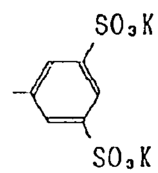 | 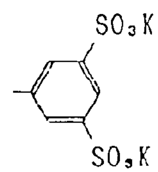 | 1 | 1 |

| No. | 3-position | 3'-position | $R^1$ | $R^2$ | $n_1$ | $n_2$ |
|---|---|---|---|---|---|---|
| 17 | 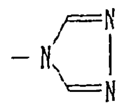 | 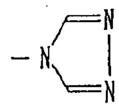 | 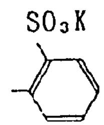 | 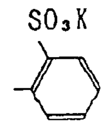 | 0 | 0 |
| 18 | 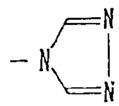 | 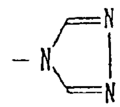 | 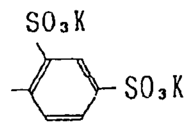 | 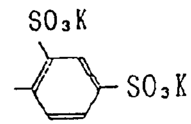 | 1 | 1 |
| 19 | 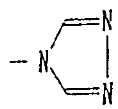 | 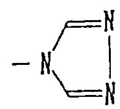 | 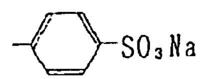 | 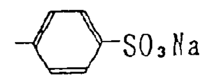 | 2 | 1 |
| 20 | 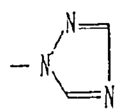 | 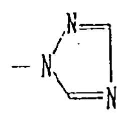 | 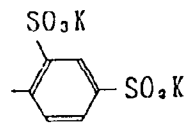 | 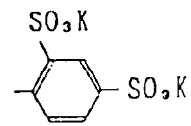 | 1 | 0 |
| 21 | 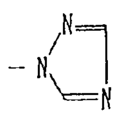 | 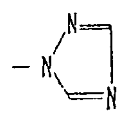 | 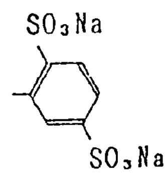 | 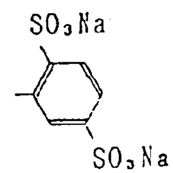 | 1 | 1 |

| No. | 3-position | 3'-position | $R^1$ | $R^2$ | $n_1$ | $n_2$ |
|---|---|---|---|---|---|---|
| 22 | 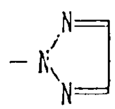 | 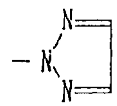 | 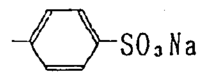 | 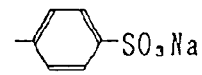 | 1 | 0 |
| 23 | 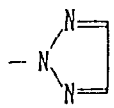 | 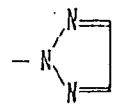 | 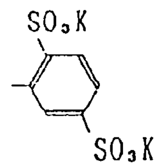 | 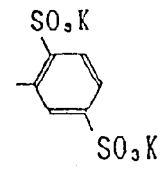 | 1 | 1 |
| 24 | 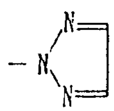 | 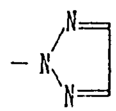 | 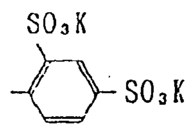 | 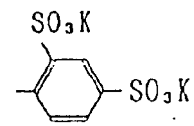 | 1 | 2 |
| 25 | 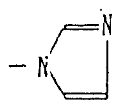 | 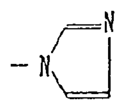 | 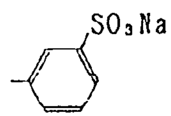 | 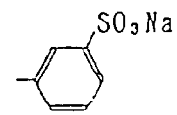 | 0 | 0 |
| 26 | 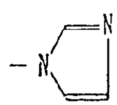 | 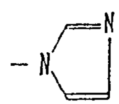 | 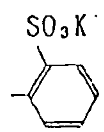 | 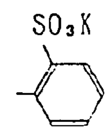 | 1 | 0 |

| No. | 3-position | 3'-position | $R^1$ | $R^2$ | $n_1$ | $n_2$ |
|---|---|---|---|---|---|---|
| 27 | 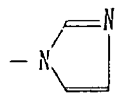 | 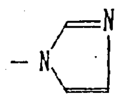 | 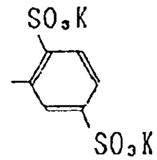 | 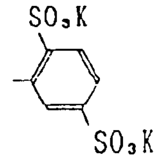 | 1 | 1 |
| 28 | 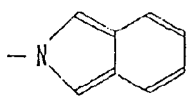 | 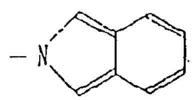 | 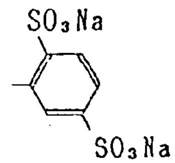 | 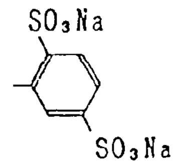 | 1 | 0 |
| 29 | 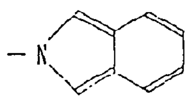 | 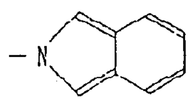 | 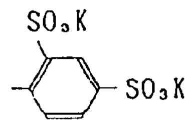 | 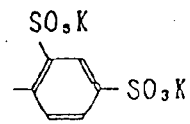 | 1 | 1 |
| 30 | 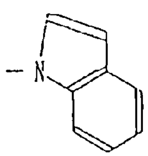 | 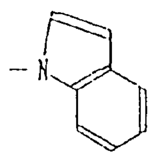 | 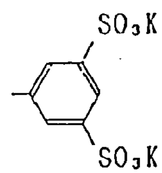 | 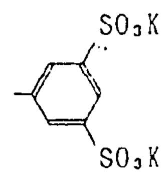 | 1 | 0 |

| No. | 3-position | 3'-position | $R^1$ | $R^2$ | $n_1$ | $n_2$ |
|---|---|---|---|---|---|---|
| 31 | 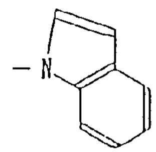 | 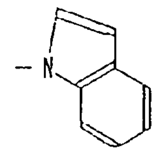 | 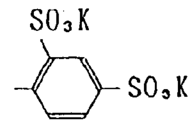 | 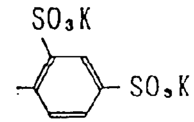 | 1 | 1 |
| 32 | 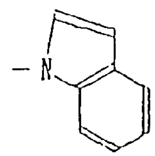 | 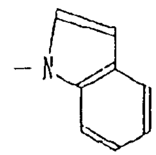 | 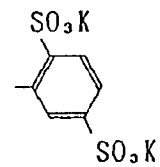 | 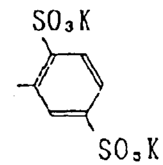 | 0 | 0 |
| 33 | 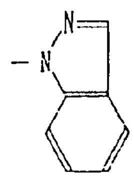 | 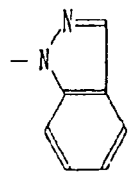 | 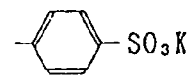 | 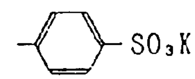 | 0 | 0 |
| 34 | 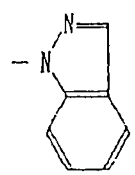 | 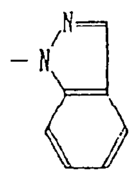 | 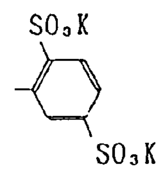 | 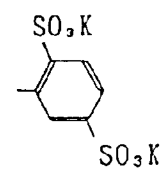 | 1 | 0 |

| No. | 3-position | 3'-position | $R^1$ | $R^2$ | $n_1$ | $n_2$ |
|---|---|---|---|---|---|---|
| 35 | 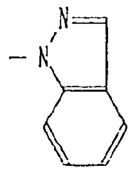 | 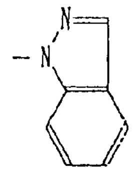 | 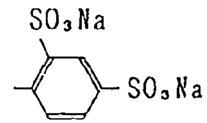 | 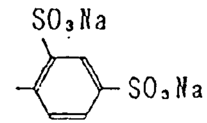 | 1 | 1 |
| 36 | 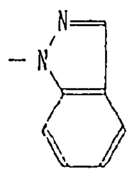 | 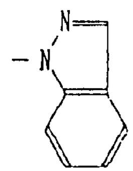 | 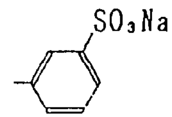 | 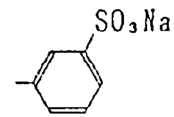 | 2 | 1 |
| 37 | 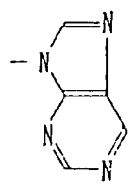 | 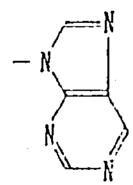 | 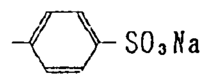 | 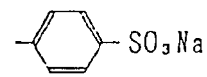 | 0 | 0 |
| 38 | 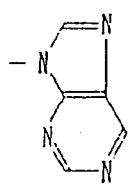 | 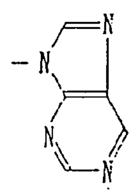 | 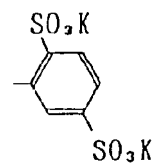 | 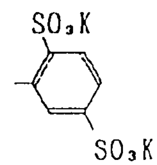 | 1 | 0 |

| No. | 3-position | 3'-position | $R^1$ | $R^2$ | $n_1$ | $n_2$ |
|---|---|---|---|---|---|---|
| 39 | 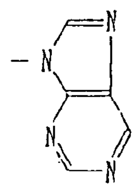 | 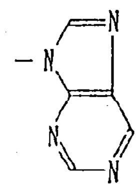 | 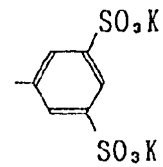 | 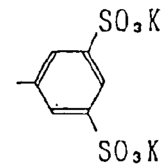 | 1 | 1 |
| 40 | 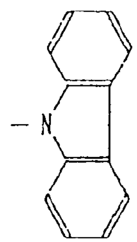 | 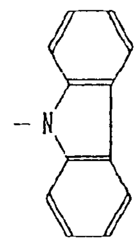 | 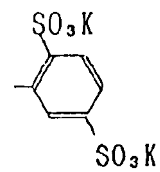 | 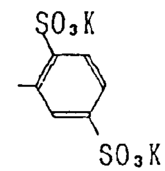 | 1 | 0 |
| 41 | 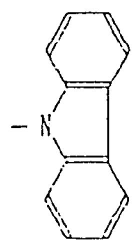 | 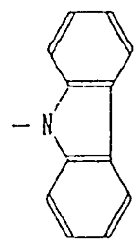 | 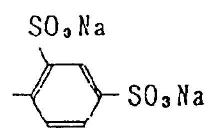 | 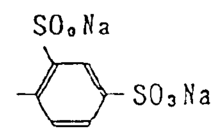 | 1 | 1 |

| No. | 3-position | 3'-position | $R^1$ | $R^2$ | $n_1$ | $n_2$ |
|---|---|---|---|---|---|---|
| 42 | 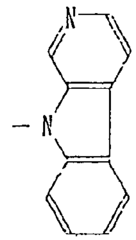 | 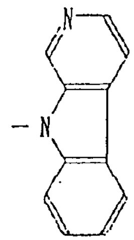 | 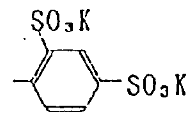 | 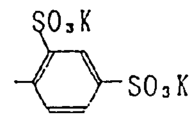 | 1 | 0 |
| 43 | 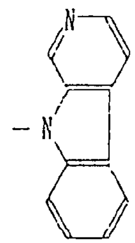 | 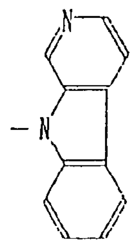 | 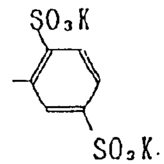 | 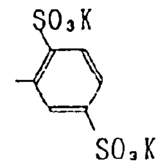 | 1 | 1 |
| 44 | 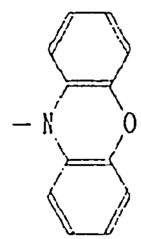 | 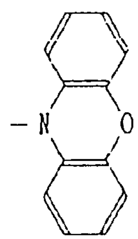 | 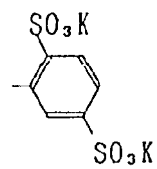 | 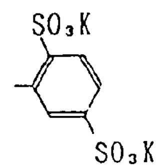 | 1 | 0 |

| No. | 3-position | 3'-position | $R^1$ | $R^2$ | $n_1$ | $n_2$ |
|---|---|---|---|---|---|---|
| 45 | 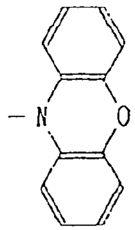 | 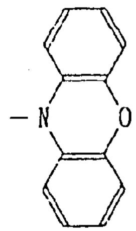 | 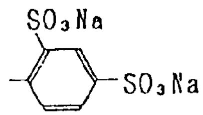 | 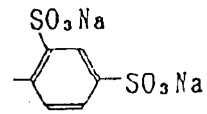 | 1 | 1 |
| 46 | 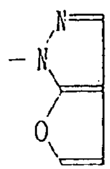 | 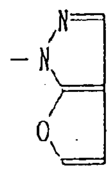 | 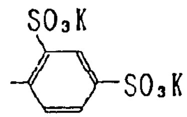 | 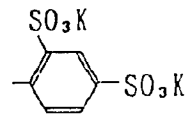 | 1 | 0 |
| 47 | 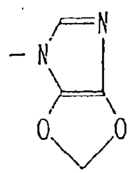 | 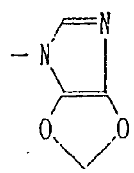 | 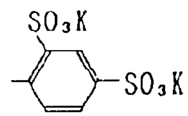 | 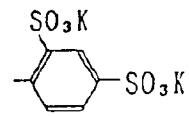 | 1 | 0 |
| 48 | 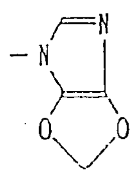 | 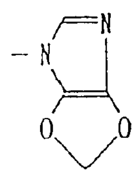 | 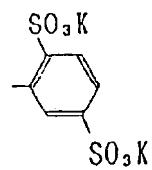 | 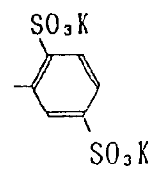 | 1 | 0 |

| No. | 3-position | 3'-position | $R^1$ | $R^2$ | $n_1$ | $n_2$ |
|---|---|---|---|---|---|---|
| 49 | 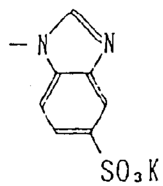 | 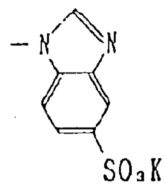 | $-CH_3$ | $-CH_3$ | 1 | 0 |
| 50 | 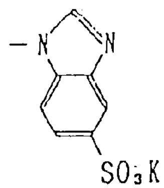 | 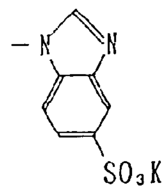 | 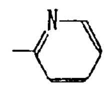 | 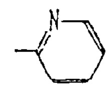 | 1 | 1 |
| 51 | 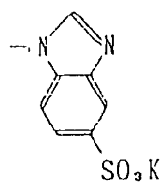 | 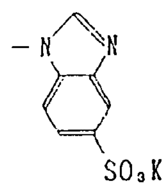 | $-CH=CH_2$ | $-CH=CH_2$ | 0 | 0 |
| 52 | 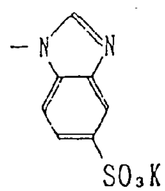 | 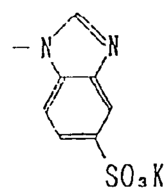 | 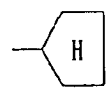 | 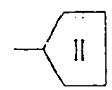 | 1 | 0 |

| No. | 3-position | 3'-position | $R^1$ | $R^2$ | $n_1$ | $n_2$ |
|---|---|---|---|---|---|---|
| 53 | 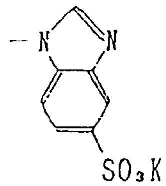 | 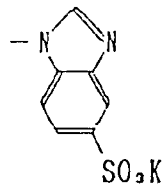 | $-CH_2-CH=CH_2$ | $-CH_2-CH=CH_2$ | 1 | 0 |
| 54 | 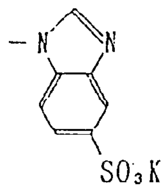 | 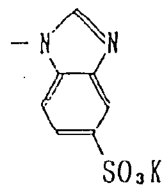 | 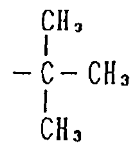 | 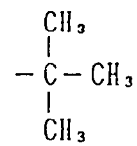 | 1 | 1 |
| 55 | 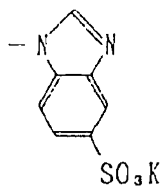 | 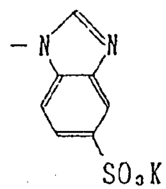 | 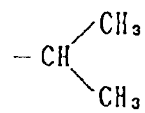 | 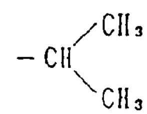 | 1 | 0 |
| 56 | 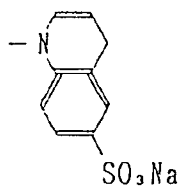 | 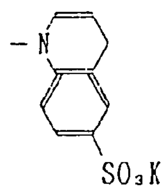 | $-CH_2CH_2COOH$ | $-CH_2CH_2COOH$ | 1 | 1 |

| No. | 3-position | 3'-position | $R^1$ | $R^2$ | $n_1$ | $n_2$ |
|---|---|---|---|---|---|---|
| 57 | 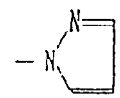 | 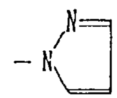 | $-CH_2CH_2SO_3K$ | $-CH_2CH_2SO_3K$ | 1 | 1 |
| 58 | 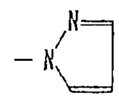 | 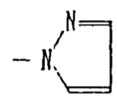 | 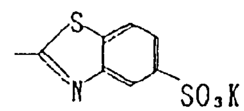 | 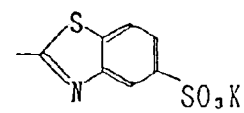 | 1 | 0 |
| 59 | 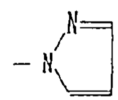 | 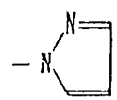 | 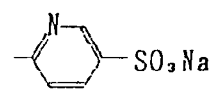 | 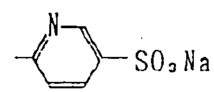 | 1 | 1 |
| 60 | 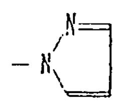 | 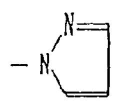 | 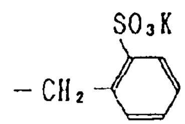 | 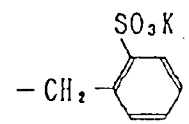 | 1 | 0 |
| 61 | 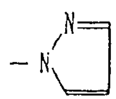 | 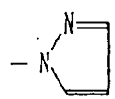 | 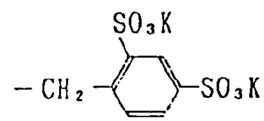 | 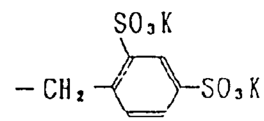 | 1 | 1 |
| 62 | 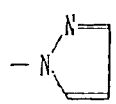 | 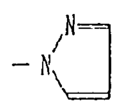 | 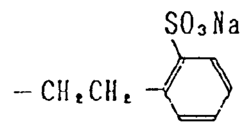 | 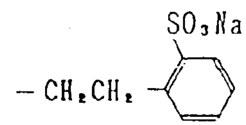 | 1 | 0 |

| No. | 3-position | 3'-position | $R^1$ | $R^2$ | $n_1$ | $n_2$ |
|---|---|---|---|---|---|---|
| 63 | 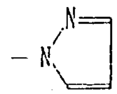 | 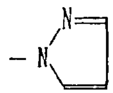 | 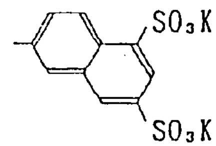 | 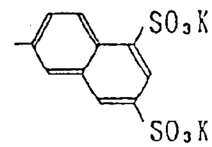 | 1 | 0 |
| 64 | 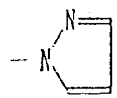 | 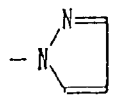 | 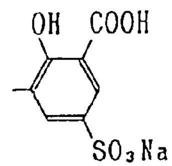 | 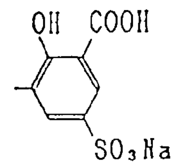 | 1 | 1 |
| 65 | 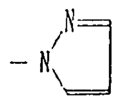 | 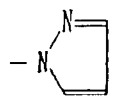 | 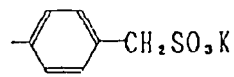 | 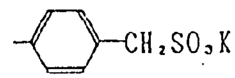 | 0 | 0 |
| 66 | 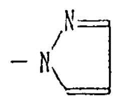 | 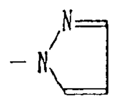 | 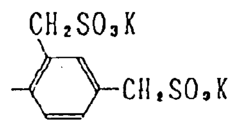 | 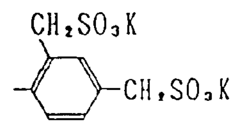 | 1 | 1 |
| 67 | 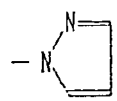 | 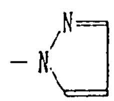 | 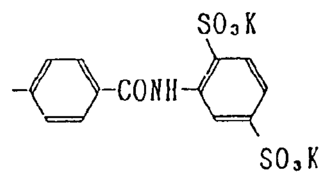 | 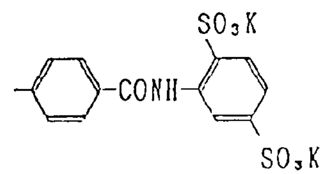 | 1 | 0 |

| No. | 3-position | 3'-position | $R^1$ | $R^2$ | $n_1$ | $n_2$ |
|---|---|---|---|---|---|---|
| 68 | 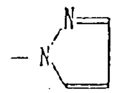 | 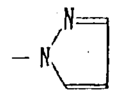 | 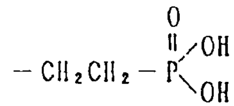 | 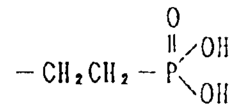 | 1 | 0 |
| 69 | 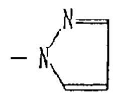 | 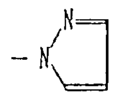 | 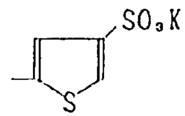 | 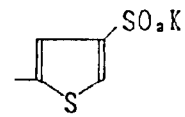 | 1 | 1 |
| 70 | 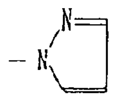 | 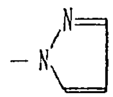 | 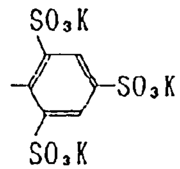 | 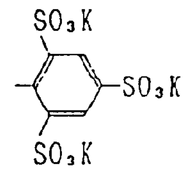 | 1 | 0 |
| 71 | 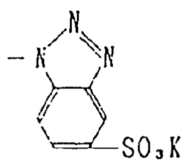 | 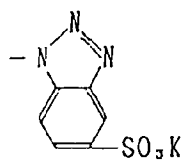 | $-H$ | $-H$ | 1 | 0 |
| 72 | 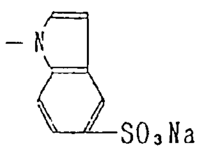 | 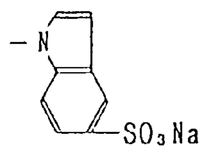 | $-H$ | $-H$ | 1 | 0 |

| No. | 3-position | 3'-position | R' | R² | n₁ | n₂ |
|---|---|---|---|---|---|---|
| 73 | 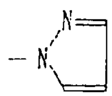 | 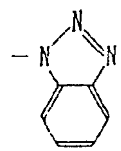 | 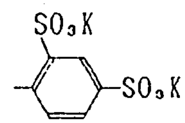 | 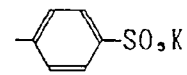 | 1 | 1 |
| 74 | 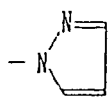 | 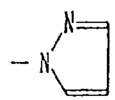 | 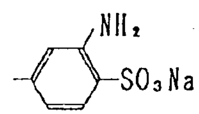 | 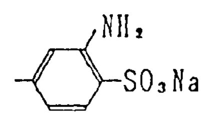 | 1 | 0 |
| 75 | 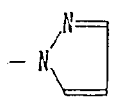 | 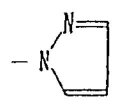 | 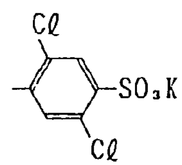 | 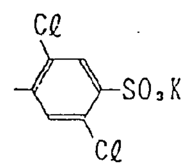 | 1 | 1 |
| 76 | 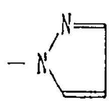 | 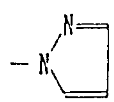 | 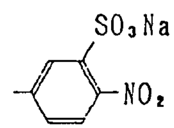 | 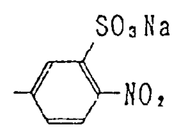 | 1 | 0 |

| No. | 3-position | 3'-position | $R^1$ | $R^2$ | $n_1$ | $n_2$ |
|---|---|---|---|---|---|---|
| 77 | 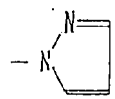 | 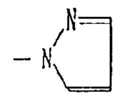 | 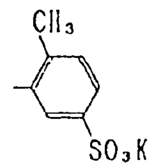 | 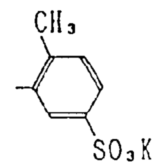 | 1 | 0 |
| 78 | 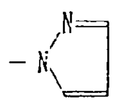 | 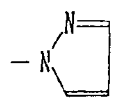 | 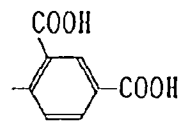 | 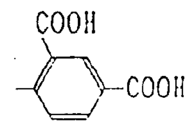 | 1 | 1 |

79

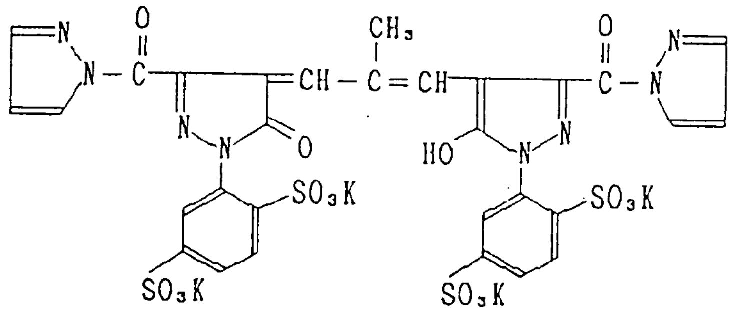

80

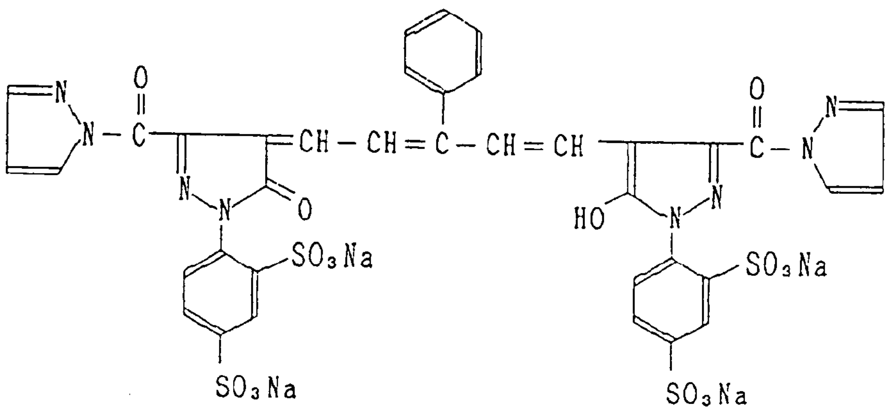

81

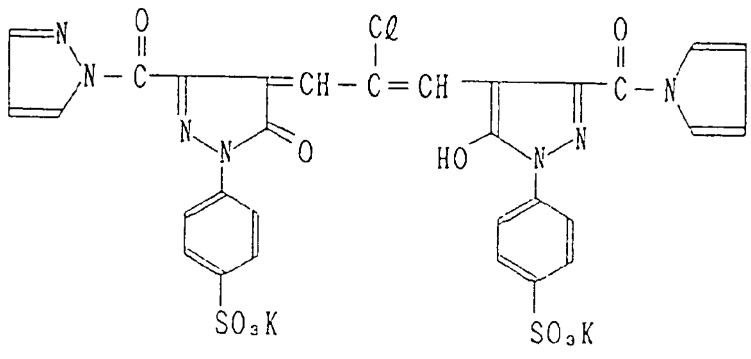

82

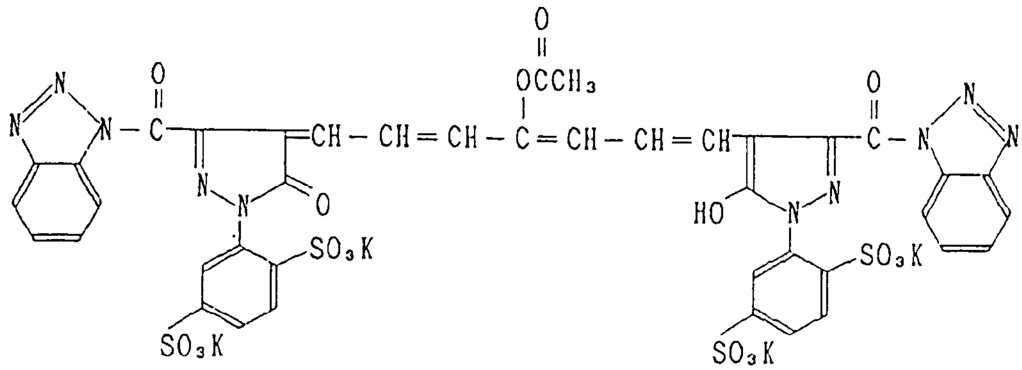

The oxonol dye to be used in the present invention can be synthesized easily according to the method disclosed in Japanese Unexamined Patent Publication No. 143342/1983.

A specific synthetic example of Exemplary compound 3 of the present invention is shown below, but the other compounds can be also synthesized in the same manner.

Synthetic example 1 Synthesis of Exemplary compound 3

Scheme 1

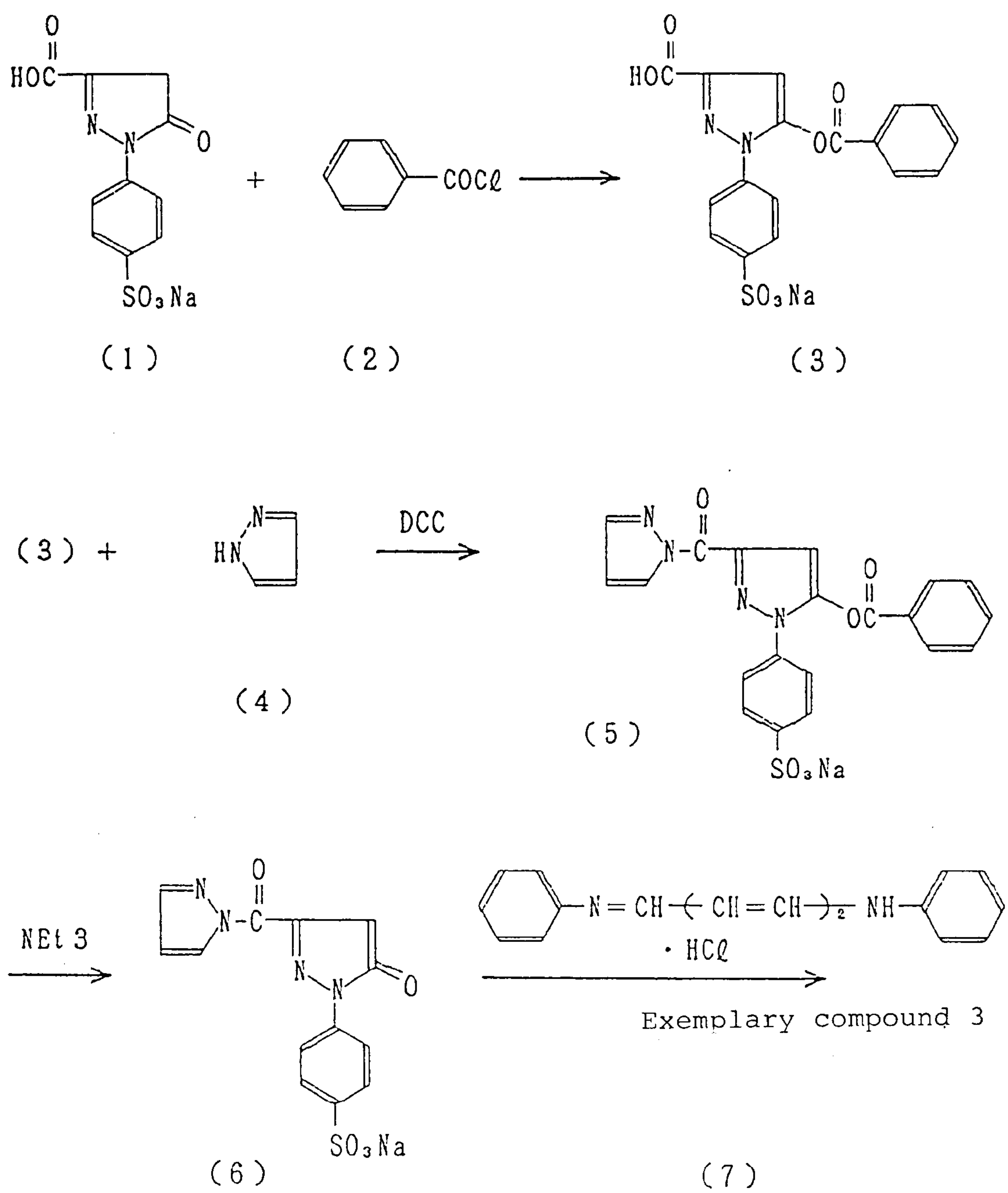


(1) (2) (3)

(3) + (4) (5)

(6) (7)

Synthesis of Compound (3) (Protection reaction)

In a 300 ml conical beaker were charged 30.6 g of Compound (1), 150 ml of dimethylformamide (hereinafter abbreviated as DMF) and 20.2 g of triethylamine, and 14 g of benzoyl chloride was slowly added dropwise to the mixture at 40 °C or lower while stirring.

After completion of the dropwise addition, the mixture was stirred at room temperature for 2 hours. To the reaction mixture was added 500 ml of acetone to precipitate crystals. The crystals were filtered and dried to obtain the title compound (3).

Amount obtained: 33 g, Yield: 80 %

Synthesis of Compound (5) (Condensation reaction)

In a beaker were charged 41 g of Compound (3) previously obtained, 6.8 g of Compound (4), 150 ml of DMF and 13.8 g of pyridine, and 21 g of dicyclohexylcarbodiimide (hereinafter abbreviated as DCC) was added little by little to the mixture at room temperature.

After completion of the addition, the mixture was stirred at room temperature for 5 hours, and the solids precipitated were filtered. To the filtrate was added 500 ml of acetone to precipitate crystals.

The crystals were collected by filtration and dried to obtain the title compound (5).

Amount obtained: 33.6 g, Yield: 73 %

Synthesis of Compound (6) (Deprotection)

In a bleaker were charged 46 g of Compound (5) previously obtained and 150 ml of methanol, and 30 g of triethylamine was added quickly to the mixture at room temperature. After completion of the addition, the mixture was stirred at room temperature for 1 hour, and then methanol was removed under reduced pressure. To the residual solids was added 150 ml of acetone, and the solids were suspended therein. The mixture was stirred and then collected by filtration to obtain the title compound (6).

Amount obtained: 36 g, Yield: 102 %

Synthesis of Exemplary compound 3 (Formation of dye)

In a bleaker were charged 3.6 g of Compound (6) previously obtained, 1.3 g of Compound (7), 25 ml of DMF and 2 g of triethylamine, and the mixture was stirred at room temperature for 7 hours.

The reaction mixture was poured into a mixture of 150 ml of ethanol and 3 g of sodium acetate, and the solids precipitated were collected by filtration and dried to obtain the title compound.

Amount obtained: 2 g, Yield: 56 %

The title compound was identified by IR, NMR and mass spectra.

By changing (7) in Scheme 1 to (8) or (9), a trimethyne compound or a monomethine compound can be obtained easily.

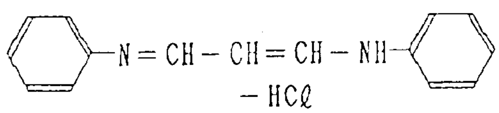

(8)

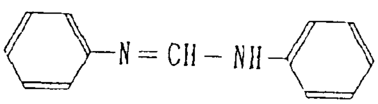

(9)

In the photographic material of the present invention, the oxonol dye represented by the above formula (I) can be used as an antiirradiation dye by incorporating it in a light-sensitive silver halide photographic emulsion, or can be used as a filter dye or an antihalation dye by incorporating it in a non-light-sensitive hydrophilic colloid layer. Further, the dye of the present invention may be used in combination of two or more kinds of them, or may be used in combination with other dyes depending on the purpose of use. The dye according to the present invention can be easily incorporated in a light-sensitive silver halide photographic emulsion layer or other hydrophilic colloid layers according to the usual method. The dye can be generally incorporated in a photographic material by dissolving the dye or an organic or inorganic alkali salt of the dye in water to give an aqueous solution of the dye with a suitable concentration, adding the solution to a coating solution and conducting coating according to the known method. The amount of the dyes to be contained may differ depending on the purpose of use, but the dyes are generally so used that the coated amount becomes 1 to 800 mg, preferably 1 to 100 mg per 1 $m^2$ of area on a light-sensitive material.

As a support of the photographic material of the present invention, there may be mentioned cellulose acetate, cellulose nitrate, a polyester film such as polyethylene terephthalate, a polyolefin film such as polyethylene, a polystyrene film, a polyamide film, a polycarbonate film, a baryta paper, a polyolefin-coated paper, a polypropylene synthetic paper, a glass plate and a metal, and these supports are selected suitably depending of the purpose of use of respective photographic materials.

As a hydrophilic colloid in the photographic material of the present invention, there may mentioned gelatin, a gelatin derivative such as phthalated gelatin and benzenesulfonylated gelatin, a water-soluble natural polymer such as agar, casein or alginic acid, a synthetic resin such as polyvinyl alcohol and polyvinyl pyrrolidone and a cellulose derivative such as carboxymethyl cellulose, and these hydrophilic colloids may be used singly or in combination of two or more of them.

As a silver halide emulsion in the photographic material of the present invention, there may be included any desired one generally used as a silver halide photographic emulsion, such as silver chloride, silver bromide, silver iodide, silver chlorobromide, silver iodobromide and silver chloroiodobromide.

The silver halide emulsion to be used in the photograhic material of the present invention can be prepared according to various preparation methods used in general, for example, the method as disclosed in Japanese Patent Publication No. 7772/1971 or the method as disclosed in U.S. Patent No. 2,592,250, that is, the method for preparing a so called conversion emulsion in which an emulsion of silver salt grains comprising silver salts at least a part of which has solubility larger than that of silver bromide is prepared, and then at least a part of these grains are converted to silver bromide salt or silver iodobromide salt, or the method for preparing a Lippmann emulsion comprising silver halide fine grains having an average grain size of 0.1 μm or less. This silver halide emulsion can be sensitized by using a chemical sensitizer, for example, a sulfur sensitizer such as thiosulfate, allylthiocarbamide, thiourea, allyl isothiocyanate and cystine; an active or inactive selenium sensitizer; and a noble metal sensitizer, for example, a gold compound such as potassium chloroaurate, auric trichloride, potassium auric thiocyanate and 2-aurothiabenzthiazole methyl chloride, a palladium compound such as ammonium chloropalladate and sodium chloropallatite, a platinum compound such as potassium chloroplatinate, a ruthenium compound, a rhodium compound and an iridium compound, or a combination of two or more of these sensitizers. Further, other than the chemical sensitization, this emulsion can be also subjected to reduction sensitization by a reducing agent, and can be stabilized by using triazoles, imidazoles, azaindenes, benzthiazolium compounds, zinc compounds, cadmium compounds, mercaptans or a mixture of these. Also in this emulsion, a sensitizing compound such as thioethers, quaternary ammonium salts or polyalkylene oxides may be contained.

The photographic emulsion to be used in the photographic material of the present invention may be spectrally sensitized by a sensitizing dye, if necessary. As the sensitizing dye, there may be used various dyes such as a cyanine dye, a merocyanine, a complex cyanine dye, an oxonol dye, a hemioxonol dye, a styryl dye, a merostyryl dye and streptocyanine, and the sensitizing dyes may be used singly or in combination of two or more kinds, respectively.

In the photographic material of the present invention, glycerin, a dihydroxyalkane such as 1,5-pentanediol, esters such as ethylene bisglycols, bis-ethoxydiethylene glycol succinate, a humectant such as a water-dispersible fine particle polymer compound obtained by emulsion polymerization, a plasticizer and an agent for improving physical properties of a film may be contained in a photographic emulsion layer and other hydrophilic colloid layers. Further, a hardener including an aldehyde compound, an N-methylol compound such as N,N′-dimethylol urea, mucohalogeno-acid, divinyl sulfones, an active halogen compound such as 2,4-dichloro-6-hydroxy-5-triazine, a dioxane derivative, divinyl ketones, isocyanates and carbodiimides, a surfactant such as saponin, polyalkylene glycol, polyalkylene glycol ether, alkylsulfonate, alkylbenzenesulfonate and alkylnaphthalenesulfonate, and various additives for photography such as a fluorescent brightener, an antistatic agent, an anti-staining agent, a UV absorber and a stabilizer may be also contained.

In the photographic material of the present invention, a colored coupler may be contained in a photographic emulsion layer. The coupler may be either four-equivalent or two-equivalent, and may be a colored coupler for masking or a coupler releasing a development inhibitor. As a yellow-forming coupler, there may be generally advantageously used an open chain ketomethylene type compound such as acylacetamide type one, as a magenta-forming coupler, a pyrazolone type compound, and as a cyan-forming coupler, a phenol or naphthol type compound.

## EXAMPLES

The present invention is described below by referring to Examples, but the present invention is not limited by these Examples.

Example 1

To 3.5 g of gelatin dissolved in 35 ml of distilled water was added 5 ml of an aqueous solution containing 2.0 x $10^{-4}$ mole of the dye to be used in the present invention or a comparative dye, and further 1.25 ml of a 10 % saponin aqueous solution and 0.75 ml of a 1 % formalin aqueous solution were added thereto. Water was added to the mixture to make the solution up to 50 ml in total. Each of the resulting aqueous dye solutions was coated on an acetyl cellulose support and dried to prepare the respective samples 1 to 95. The samples were processed by an exhausted model solution described below in which a dye is accumulated.

The respective samples were immersed in an aqueous sodium hydroxide solution (pH=10.4) containing the same dye compound of each sample in an amount of (10/mole absorption coefficient) molarity at 30 °C for 20 seconds while stirring, and washed in a water bath containing the dye in an amount of (1/mole absorption coefficient) molarity for 15 seconds, followed by drying.

For the respective samples described above, the visible spectra before and after immersion were measured, and the eluation rate was determined from the absorbance at the local maximum absorption wavelength. The results are shown in Table 1.

$$\text{Eluation rate} = \frac{E_1 - E_2}{E_1} \times 100\ (\%)$$

$E_1$ is an absorbance before immersion in the sodium hydroxide aqueous solution, and $E_2$ is an absorbance after immersion.

The samples were immersed in a developing solution having a composition shown below at 30 °C for 20 seconds, and washed in a water bath containing the dye in an amount of (1/mole absorption coefficient) molarity, followed by drying.

The visible spectra of the respective samples before and after immersion in the developing solution were measured, and the decolorization rate was determined from the absorbance at the local maximum absorption wavelength. The results are shown in Table 1.

$$\text{Decolorization rate} = \frac{E_3 - E_4}{E_3} \times 100\ (\%)$$

$E_3$ is an absorbance before immersion in the developing solution, and $E_4$ is an absorbance after immersion in the developing solution.

(Composition of developing solution)

| | |
|---|---|
| Metol | 3.0 g |
| Sodium sulfite (anhydrous) | 45.0 g |
| Sodium carbonate (monohydrate) | 80 0 g |
| Potassium bromide | 2.0 g |
| Dye | (Molecular weight) x (10/mole absorption coefficient) g |

made up to 1 liter with addition of water.

Comparative dye A

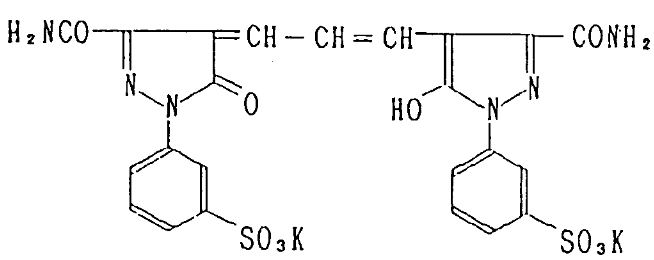

Comparative dye B

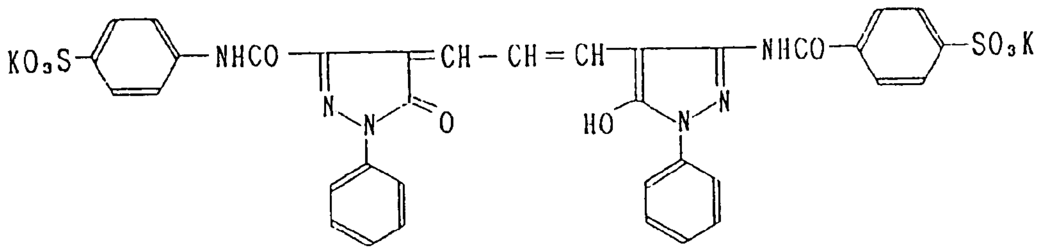

Comparative dye C

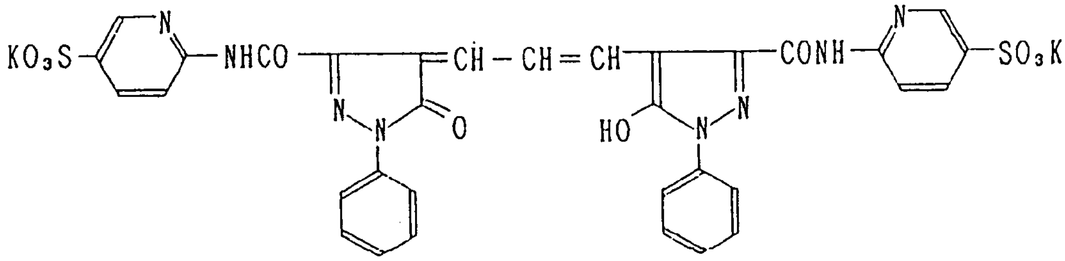

Comparative dye D

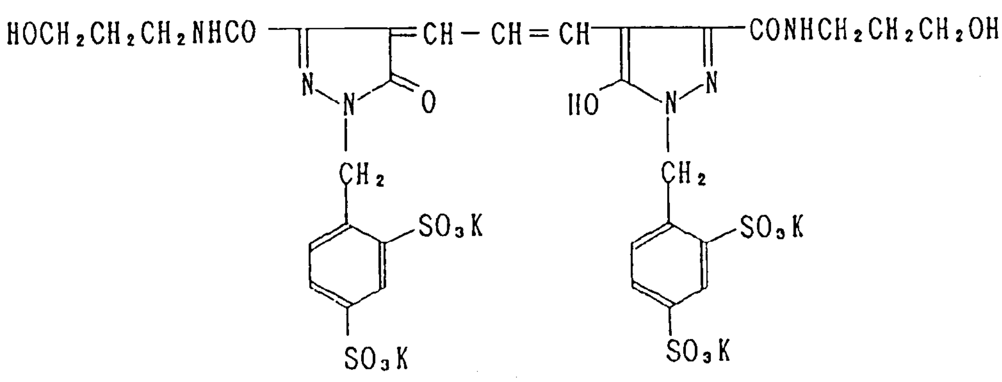

Comparative dye E

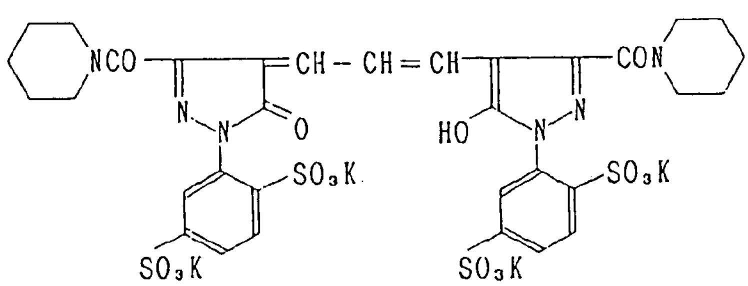

Comparative dye F

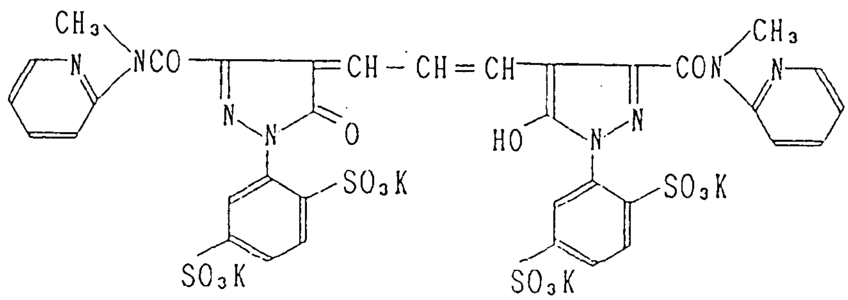

Comparative dye G

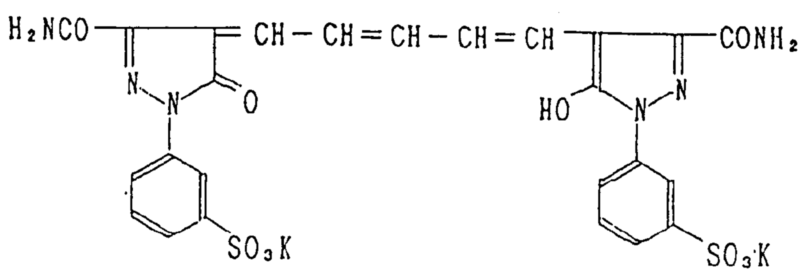

Comparative dye H

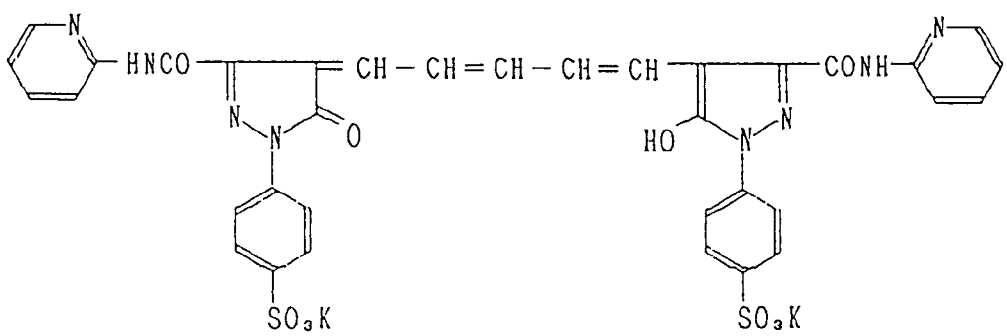

Comparative dye I

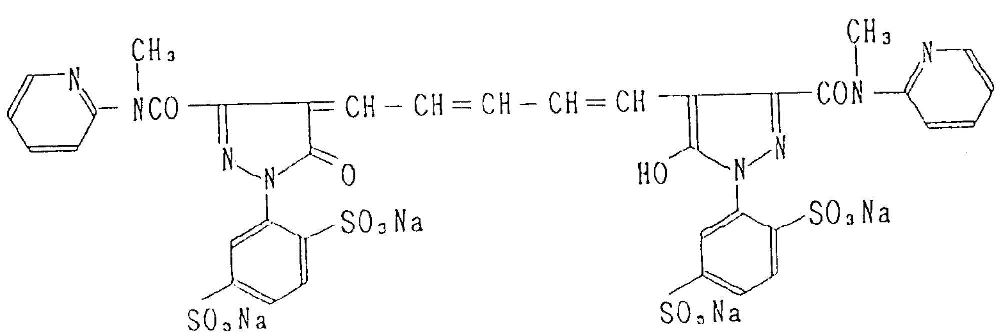

Comparative dye J

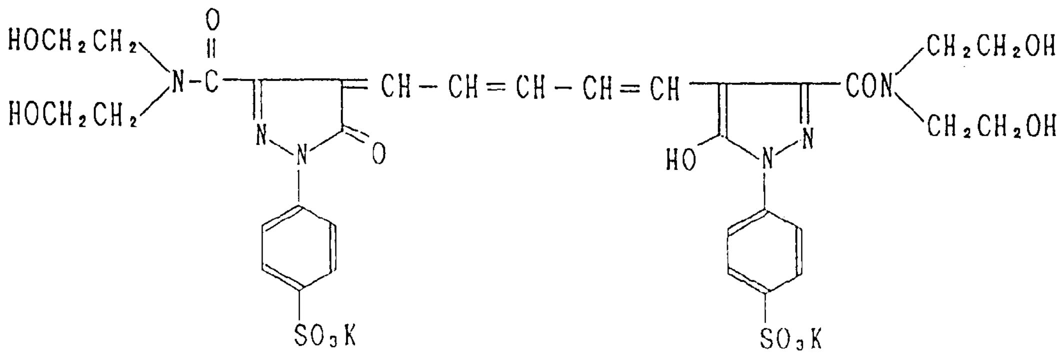

Comparative dye K

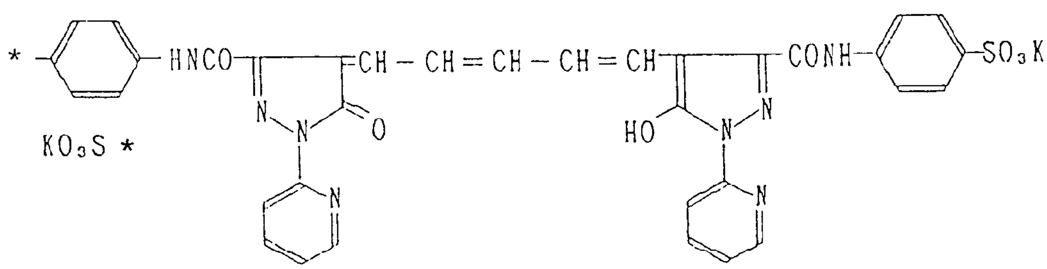

Comparative dye L

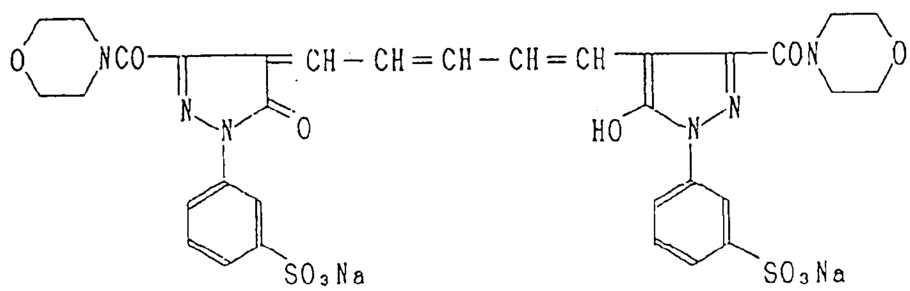

Comparative dye M

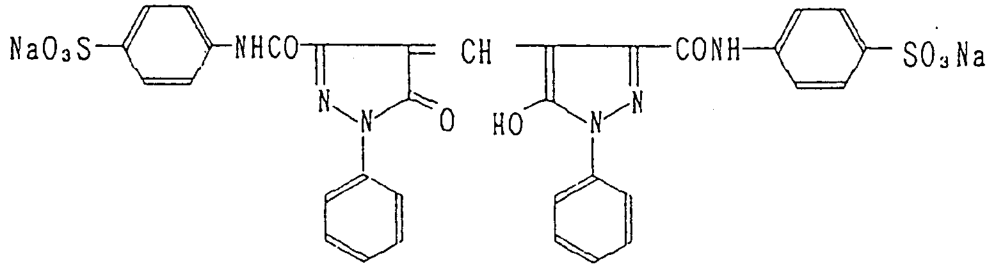

Table 1

| No. | Dye | Eluation rate (%) | Decolorization rate (%) | Remarks |
|---|---|---|---|---|
| 1-1 | Comparative dye A | 65 | 70 | Comparative |
| 1-2 | Comparative dye B | 40 | 83 | Comparative |
| 1-3 | Comparative dye C | 43 | 85 | Comparative |
| 1-4 | Comparative dye D | 70 | 73 | Comparative |
| 1-5 | Comparative dye E | 73 | 75 | Comparative |
| 1-6 | Comparative dye F | 75 | 85 | Comparative |
| 1-7 | Comparative dye G | 60 | 75 | Comparative |
| 1-8 | Comparative dye H | 50 | 90 | Comparative |
| 1-9 | Comparative dye I | 70 | 90 | Comparative |
| 1-10 | Comparative dye J | 73 | 78 | Comparative |
| 1-11 | Comparative dye K | 52 | 91 | Comparative |
| 1-12 | Comparative dye L | 65 | 75 | Comparative |
| 1-13 | Comparative dye M | 55 | 59 | Comparative |
| 1-14 | Exemplary compound 1 | 93 | 94 | Present invention |
| 1-15 | Exemplary compound 2 | 93 | 95 | Present invention |
| 1-16 | Exemplary compound 3 | 92 | 95 | Present invention |
| 1-17 | Exemplary compound 4 | 89 | 94 | Present invention |
| 1-18 | Exemplary compound 5 | 91 | 94 | Present invention |
| 1-19 | Exemplary compound 6 | 92 | 93 | Present invention |
| 1-20 | Exemplary compound 7 | 93 | 94 | Present invention |
| 1-21 | Exemplary compound 8 | 92 | 94 | Present invention |
| 1-22 | Exemplary compound 9 | 93 | 95 | Present invention |
| 1-23 | Exemplary compound 10 | 92 | 94 | Present invention |

Table 1 (cont'd)

| No. | Dye | Eluation rate (%) | Decolorization rate (%) | Remarks |
|---|---|---|---|---|
| 1-24 | Exemplary compound 11 | 93 | 95 | Present invention |
| 1-25 | Exemplary compound 12 | 92 | 93 | Present invention |
| 1-26 | Exemplary compound 13 | 92 | 94 | Present invention |
| 1-27 | Exemplary compound 14 | 93 | 94 | Present invention |
| 1-28 | Exemplary compound 15 | 93 | 93 | Present invention |
| 1-29 | Exemplary compound 16 | 91 | 94 | Present invention |
| 1-30 | Exemplary compound 17 | 93 | 94 | Present invention |
| 1-31 | Exemplary compound 18 | 92 | 94 | Present invention |
| 1-32 | Exemplary compound 19 | 93 | 97 | Present invention |
| 1-33 | Exemplary compound 20 | 92 | 94 | Present invention |
| 1-34 | Exemplary compound 21 | 92 | 94 | Present invention |
| 1-35 | Exemplary compound 22 | 93 | 94 | Present invention |
| 1-36 | Exemplary compound 23 | 92 | 95 | Present invention |
| 1-37 | Exemplary compound 24 | 94 | 97 | Present invention |
| 1-38 | Exemplary compound 25 | 94 | 94 | Present invention |
| 1-39 | Exemplary compound 26 | 92 | 94 | Present invention |
| 1-40 | Exemplary compound 27 | 91 | 94 | Present invention |
| 1-41 | Exemplary compound 28 | 92 | 94 | Present invention |
| 1-42 | Exemplary compound 29 | 92 | 94 | Present invention |
| 1-43 | Exemplary compound 30 | 92 | 94 | Present invention |
| 1-44 | Exemplary compound 31 | 93 | 94 | Present invention |
| 1-45 | Exemplary compound 32 | 93 | 95 | Present invention |
| 1-46 | Exemplary compound 33 | 93 | 95 | Present invention |

Table 1 (cont'd)

| No. | Dye | Eluation rate (%) | Decoloriza-tion rate (%) | Remarks |
|---|---|---|---|---|
| 1-47 | Exemplary compound 34 | 94 | 95 | Present invention |
| 1-48 | Exemplary compound 35 | 93 | 95 | Present invention |
| 1-49 | Exemplary compound 36 | 92 | 96 | Present invention |
| 1-50 | Exemplary compound 37 | 87 | 88 | Present invention |
| 1-51 | Exemplary compound 38 | 85 | 92 | Present invention |
| 1-52 | Exemplary compound 39 | 84 | 93 | Present invention |
| 1-53 | Exemplary compound 40 | 85 | 91 | Present invention |
| 1-54 | Exemplary compound 41 | 84 | 93 | Present invention |
| 1-55 | Exemplary compound 42 | 86 | 92 | Present invention |
| 1-56 | Exemplary compound 43 | 84 | 93 | Present invention |
| 1-57 | Exemplary compound 44 | 85 | 91 | Present invention |
| 1-58 | Exemplary compound 45 | 84 | 92 | Present invention |
| 1-59 | Exemplary compound 46 | 87 | 92 | Present invention |
| 1-60 | Exemplary compound 47 | 87 | 91 | Present invention |
| 1-61 | Exemplary compound 48 | 85 | 93 | Present invention |
| 1-62 | Exemplary compound 49 | 86 | 92 | Present invention |
| 1-63 | Exemplary compound 50 | 86 | 93 | Present invention |
| 1-64 | Exemplary compound 51 | 87 | 89 | Present invention |
| 1-65 | Exemplary compound 52 | 87 | 92 | Present invention |
| 1-66 | Exemplary compound 53 | 87 | 92 | Present invention |
| 1-67 | Exemplary compound 54 | 85 | 94 | Present invention |
| 1-68 | Exemplary compound 55 | 86 | 92 | Present invention |
| 1-69 | Exemplary compound 56 | 84 | 93 | Present invention |

Table 1 (cont'd)

| No. | Dye | Eluation rate (%) | Decolorization rate (%) | Remarks |
|---|---|---|---|---|
| 1-70 | Exemplary compound 57 | 91 | 94 | Present invention |
| 1-71 | Exemplary compound 58 | 85 | 92 | Present invention |
| 1-72 | Exemplary compound 59 | 85 | 93 | Present invention |
| 1-73 | Exemplary compound 60 | 92 | 93 | Present invention |
| 1-74 | Exemplary compound 61 | 91 | 94 | Present invention |
| 1-75 | Exemplary compound 62 | 91 | 93 | Present invention |
| 1-76 | Exemplary compound 63 | 87 | 92 | Present invention |
| 1-77 | Exemplary compound 64 | 90 | 93 | Present invention |
| 1-78 | Exemplary compound 65 | 94 | 94 | Present invention |
| 1-79 | Exemplary compound 66 | 93 | 95 | Present invention |
| 1-80 | Exemplary compound 67 | 90 | 93 | Present invention |
| 1-81 | Exemplary compound 68 | 90 | 92 | Present invention |
| 1-82 | Exemplary compound 69 | 85 | 92 | Present invention |
| 1-83 | Exemplary compound 70 | 90 | 92 | Present invention |
| 1-84 | Exemplary compound 71 | 85 | 91 | Present invention |
| 1-85 | Exemplary compound 72 | 84 | 93 | Present invention |
| 1-86 | Exemplary compound 73 | 92 | 93 | Present invention |
| 1-87 | Exemplary compound 74 | 91 | 92 | Present invention |
| 1-88 | Exemplary compound 75 | 92 | 93 | Present invention |
| 1-89 | Exemplary compound 76 | 92 | 93 | Present invention |
| 1-90 | Exemplary compound 77 | 93 | 94 | Present invention |
| 1-91 | Exemplary compound 78 | 92 | 94 | Present invention |

Table 1 (cont'd)

| No. | Dye | Eluation rate (%) | Decolorization rate (%) | Remarks |
|---|---|---|---|---|
| 1-92 | Exemplary compound 79 | 93 | 94 | Present invention |
| 1-93 | Exemplary compound 80 | 92 | 94 | Present invention |
| 1-94 | Exemplary compound 81 | 93 | 95 | Present invention |
| 1-95 | Exemplary compound 82 | 93 | 95 | Present invention |

As can be clearly seen from Table 1, the samples of the present invention exhibit high eluation rate and decolorization rate, and the exemplary dyes according to the present invention are eluted easily from a gelatin layer and exhibit excellent decoloration property when compared with the comparative dyes.

Example 2

Light-sensitive color materials for printing were prepared according to the process in the following (1). The samples obtained were subjected to imagewise exposure, and then processed by using a color developing solution and a bleach-fixing solution shown below. The characteristics concerning the respective dye images formed were measured.

(1) Preparation of samples

After a paper support the surfaces of which were coated with polyethylene containing anataze type titanium oxide as a white pigment was subjected to pretreatment by subbing with gelatin, the following layers were provided by coating successively to prepare samples.

Layer 1: Blue-sensitive silver chlorobromide emulsion layer

A silver chlorobromide emulsion containing 5 mole % of silver chloride and an emulsified dispersion prepared by dissolving a yellow coupler (Y-1) shown below and 2,5-di-tert-octylhydroquinone in dioctyl phthalate were provided by coating.

Layer 2: First intermediate layer

An emulsified dispersion prepared by dissolving 2,5-di-tert-octylhydroquinone in dioctyl phthalate was provided by coating.

Layer 3: Green-sensitive silver chlorobromide emulsion layer

A silver chlorobromide emulsion containing 15 mole % of silver chloride, an emulsified dispersion prepared by dissolving a magenta coupler (M-1) shown below and 2,5-di-tert-octylhydroquinone in dioctyl phthalate and an aqueous dye solution shown in the following Table 3 were provided by coating.

Layer 4: Second intermediate layer

An emulsified dispersion prepared by dissolving a UV absorber (UV-1) shown below and 2,5-di-tert-octylhydroquinone in dioctyl phthalate and an aqueous dye solution shown in Table 3 were provided by coating.

Layer 5: Red-sensitive silver chlorobromide emulsion layer

A silver chlorobromide emulsion containing 25 mole % of silver chloride and an emulsified dispersion prepared by dissolving a cyan coupler (C-1) shown below and 2,5-di-tert-octylhydroquinone in dioctyl phthalate were

provided by coating.

Layer 6: Protective layer

Gelatin, a hardener and an antifungal agent were mainly provided by coating.

(Y-1)

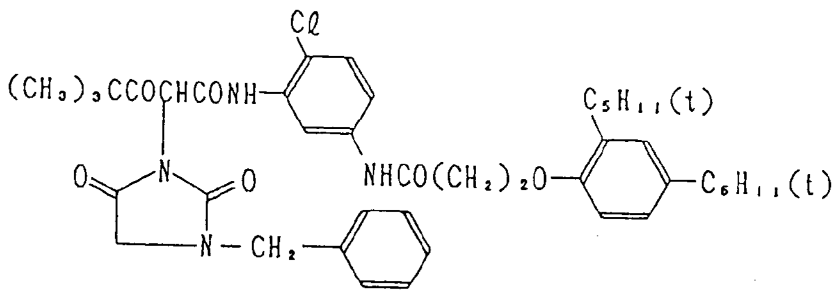

(M-1)

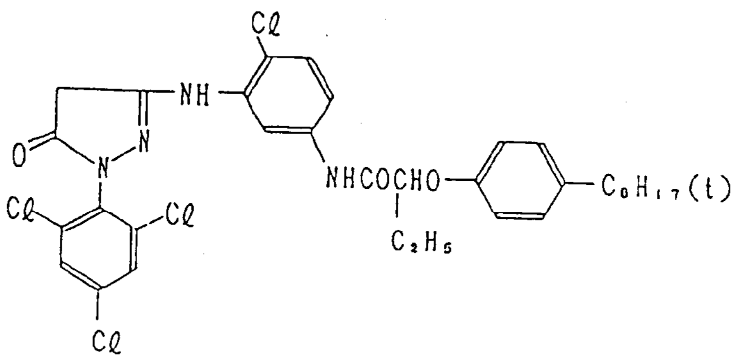

(C-1)

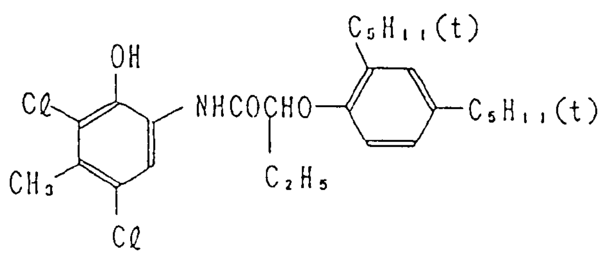

(UV-1)

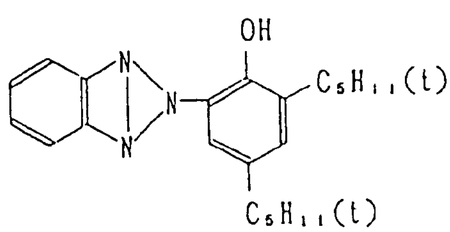

Hardener

$$H_2C = CH\text{-}SO_2CH_2OCH_2SO_2CH = CH_2$$

Antifungal agent

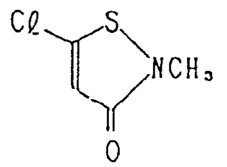
,
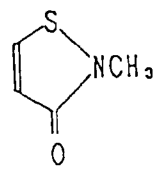

The amounts of the respective components of the above samples (mg/100 $cm^2$) are shown in Table 2.

Table 2

| | Silver halide emulsion | UV-absorber Coupler | 2,5-di-tert-octyl hydroquinone | Gelatin |
|---|---|---|---|---|
| Layer 1 | (Blue-sensitive silver chlorobromide emulsion) 3 mg calculated on silver | (Y-1) 8 mg | 0.5 mg | 20 mg |
| Layer 2 | (Intermediate layer) | - | 1.0 mg | 10 mg |
| Layer 3 | (Green-sensitive silver chlorobromide emulsion) 4 mg calculated on silver | (M-1) 5 mg | 0.5 mg | 15 mg |
| Layer 4 | (Intermediate layer) | (UV-1) 6 mg | 1.0 mg | 10 mg |
| Layer 5 | (Red-sensitive silver chlorobromide emulsion) 3 mg calculated on silver | (C-1) 4 mg | 0.5 mg | 15 mg |
| Layer 6 | (Protective layer) | - | - | 10 mg |

By using the above layer constitution and changing a dye in the green-sensitive silver chlorobromide emulsion layer and Layer 4 (intermediate layer), samples shown in Table 3 were prepared, and by changing a dye in the red-sensitive silver chlorobromide emulsion layer and Layer 4 (intermediate layer), samples shown in Table 4 were prepared. For the respective samples, the following evaluations were conducted.

(1) Fog

The unexposed samples were processed by using the following processing steps, and the magenta and cyan densities of the resulting samples were measured by using Gretag model D-122 type densitometer (trade name, produced by Gretag Co.).

(2) Residual color stain

For measuring the degree of colored stain caused by residual color of the dye after development processing of the sample, there was prepared a solution which was the same as the color developing solution used in the processing steps in the above (1) except that N-ethyl-N-β-methanesulfonamidoethyl-3-methyl-4-aminoaniline

sulfate was not used, and the same measurement as in (1) was conducted. The results are shown in Table 3 and Table 4.

Processing steps (38 °C)

| | | |
|---|---|---|
| Color development | 2 min 30 sec | |
| Bleach-fixing | 1 min | |
| Washing | 1 min | |
| Drying | 60 to 80 °C | 2 min. |

The respective processing solutions had the following compositions.

(Color developing solution)

| | |
|---|---|
| Pure water | 800 ml |
| Benzyl alcohol | 15 ml |
| Triethanolamine | 10 g |
| Hydroxylamine sulfate | 2.0 g |
| Potassium bromide | 1.5 g |
| Sodium chloride | 1.0 g |
| Potassium sulfite | 2.0 g |
| N-ethyl-N-β-methanesulfonamidoethyl-3-methyl-4-aminoaniline sulfate | 4.5 g |
| 1-Hydroxyethylidene-1,1-diphosphonic acid (60 % aqueous solution) | 1.5 ml |
| Potassium carbonate | 32 g |
| Whitex BB (50 % aqueous solution) (trade name, a fluorescent brightener, produced by Sumitomo Kagaku Kogyo K.K.) | 2 ml |

made up to 1 liter with addition of pure water, and adjusted pH to 10.1 with 20 % potassium hydroxide or 10 % diluted sulfuric acid.

(Bleach-fixing solution)

| | |
|---|---|
| Pure water | 600 ml |
| Iron (III) ammonium ethylenediamine-tetraacetate | 65 g |
| Ammonium thiosulfate | 85 g |
| Sodium hydrogen sulfite | 10 g |
| Sodium metabisulfite | 2 g |
| Sodium bromide | 10 g |

made up to 1 liter with addition of pure water, and adjusted pH to 7.0 with diluted sulfuric acid.

Table 3

| No. | Dye in green-sensitive silver chlorobromide emulsion layer (mg) | Reflection density at unexposed portion | | Remarks |
|---|---|---|---|---|
| | | (1) Fog | (2) Stain | |
| 2-1 | Comparative dye A 0.32 | 0.016 | 0.014 | Comparative |
| 2-2 | Comparative dye B 0.32 | 0.020 | 0.018 | Comparative |
| 2-3 | Comparative dye C 0.32 | 0.019 | 0.017 | Comparative |
| 2-4 | Comparative dye D 0.32 | 0.015 | 0.013 | Comparative |
| 2-5 | Comparative dye E 0.32 | 0.013 | 0.011 | Comparative |
| 2-6 | Comparative dye F 0.32 | 0.014 | 0.012 | Comparative |
| 2-7 | - | 0.002 | 0 | Comparative |
| 2-8 | Exemplary compound 2 0.32 | 0.005 | 0.003 | Present invention |
| 2-9 | Exemplary compound 5 0.32 | 0.005 | 0.003 | Present invention |
| 2-10 | Exemplary compound 9 0.32 | 0.007 | 0.005 | Present invention |
| 2-11 | Exemplary compound 10 0.32 | 0.007 | 0.005 | Present invention |
| 2-12 | Exemplary compound 14 0.32 | 0.005 | 0.003 | Present invention |
| 2-13 | Exemplary compound 20 0.32 | 0.005 | 0.003 | Present invention |
| 2-14 | Exemplary compound 22 0.32 | 0.005 | 0.003 | Present invention |
| 2-15 | Exemplary compound 26 0.32 | 0.005 | 0.003 | Present invention |
| 2-16 | Exemplary compound 28 0.32 | 0.007 | 0.005 | Present invention |
| 2-17 | Exemplary compound 30 0.32 | 0.007 | 0.005 | Present invention |
| 2-18 | Exemplary compound 34 0.32 | 0.007 | 0.005 | Present invention |
| 2-19 | Exemplary compound 38 0.32 | 0.007 | 0.004 | Present invention |
| 2-20 | Exemplary compound 40 0.32 | 0.008 | 0.005 | Present invention |
| 2-21 | Exemplary compound 42 0.32 | 0.008 | 0.004 | Present invention |
| 2-22 | Exemplary compound 44 0.32 | 0.007 | 0.005 | Present invention |

Table 3 (cont'd)

| No. | Dye in green-sensitive silver chlorobromide emulsion layer (mg) | Reflection density at unexposed portion | | Remarks |
|---|---|---|---|---|
| | | (1) Fog | (2) Stain | |
| 2-23 | Exemplary compound 46 0.32 | 0.007 | 0.005 | Present invention |
| 2-24 | Exemplary compound 47 0.32 | 0.007 | 0.005 | Present invention |
| 2-25 | Exemplary compound 49 0.32 | 0.007 | 0.005 | Present invention |
| 2-26 | Exemplary compound 52 0.32 | 0.007 | 0.005 | Present invention |
| 2-27 | Exemplary compound 53 0.32 | 0.007 | 0.005 | Present invention |
| 2-28 | Exemplary compound 55 0.32 | 0.007 | 0.004 | Present invention |
| 2-29 | Exemplary compound 58 0.32 | 0.008 | 0.005 | Present invention |
| 2-30 | Exemplary compound 60 0.32 | 0.006 | 0.004 | Present invention |
| 2-31 | Exemplary compound 62 0.32 | 0.006 | 0.004 | Present invention |
| 2-32 | Exemplary compound 63 0.32 | 0.007 | 0.005 | Present invention |
| 2-33 | Exemplary compound 67 0.32 | 0.006 | 0.004 | Present invention |
| 2-34 | Exemplary compound 68 0.32 | 0.006 | 0.004 | Present invention |
| 2-35 | Exemplary compound 70 0.32 | 0.005 | 0.003 | Present invention |
| 2-36 | Exemplary compound 71 0.32 | 0.007 | 0.003 | Present invention |
| 2-37 | Exemplary compound 74 0.32 | 0.005 | 0.004 | Present invention |
| 2-38 | Exemplary compound 76 0.32 | 0.005 | 0.004 | Present invention |
| 2-39 | Exemplary compound 77 0.32 | 0.005 | 0.003 | Present invention |
| 2-40 | Exemplary compound 79 0.32 | 0.005 | 0.003 | Present invention |
| 2-41 | Exemplary compound 81 0.32 | 0.005 | 0.003 | Present invention |

Table 4

| No. | Dye in red-sensitive silver chlorobromide emulsion layer (mg) | Reflection density at unexposed portion | | Remarks |
|---|---|---|---|---|
| | | (1) Fog | (2) Stain | |
| 3-1 | Comparative dye G 0.32 | 0.016 | 0.013 | Comparative |
| 3-2 | Comparative dye H 0.32 | 0.020 | 0.017 | Comparative |
| 3-3 | Comparative dye I 0.32 | 0.018 | 0.015 | Comparative |
| 3-4 | Comparative dye J 0.32 | 0.016 | 0.012 | Comparative |
| 3-5 | Comparative dye K 0.32 | 0.019 | 0.016 | Comparative |
| 3-6 | Comparative dye L 0.32 | 0.018 | 0.016 | Comparative |
| 3-7 | - | 0.003 | - | Comparative |
| 3-8 | Exemplary compound 3 0.32 | 0.005 | 0.003 | Present invention |
| 3-9 | Exemplary compound 4 0.32 | 0.005 | 0.003 | Present invention |
| 3-10 | Exemplary compound 8 0.32 | 0.005 | 0.003 | Present invention |
| 3-11 | Exemplary compound 11 0.32 | 0.007 | 0.004 | Present invention |
| 3-12 | Exemplary compound 13 0.32 | 0.008 | 0.003 | Present invention |
| 3-13 | Exemplary compound 16 0.32 | 0.005 | 0.003 | Present invention |
| 3-14 | Exemplary compound 18 0.32 | 0.005 | 0.003 | Present invention |
| 3-15 | Exemplary compound 21 0.32 | 0.005 | 0.003 | Present invention |
| 3-16 | Exemplary compound 23 0.32 | 0.005 | 0.003 | Present invention |
| 3-17 | Exemplary compound 27 0.32 | 0.005 | 0.003 | Present invention |
| 3-18 | Exemplary compound 29 0.32 | 0.007 | 0.003 | Present invention |
| 3-19 | Exemplary compound 31 0.32 | 0.007 | 0.004 | Present invention |
| 3-20 | Exemplary compound 35 0.32 | 0.007 | 0.004 | Present invention |
| 3-21 | Exemplary compound 39 0.32 | 0.008 | 0.003 | Present invention |
| 3-22 | Exemplary compound 41 0.32 | 0.008 | 0.005 | Present invention |

Table 4 (cont'd)

| No. | Dye in red-sensitive silver chlorobromide emulsion layer (mg) | Reflection density at unexposed portion | | Remarks |
|---|---|---|---|---|
| | | (1) Fog | (2) Stain | |
| 3-23 | Exemplary compound 43 0.32 | 0.008 | 0.003 | Present invention |
| 3-24 | Exemplary compound 45 0.32 | 0.008 | 0.004 | Present invention |
| 3-25 | Exemplary compound 48 0.32 | 0.008 | 0.004 | Present invention |
| 3-26 | Exemplary compound 50 0.32 | 0.007 | 0.003 | Present invention |
| 3-27 | Exemplary compound 54 0.32 | 0.007 | 0.004 | Present invention |
| 3-28 | Exemplary compound 56 0.32 | 0.008 | 0.005 | Present invention |
| 3-29 | Exemplary compound 57 0.32 | 0.006 | 0.003 | Present invention |
| 3-30 | Exemplary compound 59 0.32 | 0.007 | 0.004 | Present invention |
| 3-31 | Exemplary compound 61 0.32 | 0.006 | 0.004 | Present invention |
| 3-32 | Exemplary compound 64 0.32 | 0.005 | 0.003 | Present invention |
| 3-33 | Exemplary compound 66 0.32 | 0.005 | 0.003 | Present invention |
| 3-34 | Exemplary compound 69 0.32 | 0.007 | 0.004 | Present invention |
| 3-35 | Exemplary compound 72 0.32 | 0.008 | 0.004 | Present invention |
| 3-36 | Exemplary compound 73 0.32 | 0.007 | 0.004 | Present invention |
| 3-37 | Exemplary compound 75 0.32 | 0.005 | 0.003 | Present invention |
| 3-38 | Exemplary compound 78 0.32 | 0.005 | 0.003 | Present invention |
| 3-39 | Exemplary compound 80 0.32 | 0.005 | 0.003 | Present invention |

In Table 3 and Table 4 shown above, the respective numbers of the dyes are amounts coated (mg) per 100 $cm^2$.

As to whiteness desired in a light-sensitive color material for printing, fog is required to be 0.01 or less in practical use. From Table 3 and Table 4, it is apparant that the samples of the present invention satisfy the above requirement. Further, almost no colored stain caused by residual color of the dye as seen in the samples containing the comparative dyes is observed in the samples of the present invention. Thus, it was found that the dye according to the present invention exerted extremely small bad influence on the emulsion

Example 3

On a triacetyl cellulose film support subjected to subbing treatment, the respective layers having compositions shown below were provided by coating successively from a support side to prepare Sample 4-1 as a comparative sample of a multilayer light-sensitive color material. The amounts of the respective components coated are shown by $g/m^2$.

First Layer (Antihalation layer)

| | |
|---|---|
| UV absorber (U-1) | 0.3 |
| UV absorber (U-2) | 0.4 |
| High boiling point solvent (Oil-1) | 1.0 |
| Black colloidal silver | 0.24 |
| Gelatin | 2.0 |

Second layer (Intermediate layer)

| | |
|---|---|
| 2,5-di-t-octylhydroquinone | 0.1 |
| High boiling point solvent (Oil-1) | 0.2 |
| Gelatin | 1.0 |

Third layer (Low-sensitivity red-sensitive silver halide emulsion layer)

| | |
|---|---|
| AgBrI spectrally sensitized by red sensitizing dyes (S-1 and S-2) (AgI: 4.0 mole %, average grain size: 0.25 µm) | 0.5 |
| Coupler (C-1) | 0.1 mole |
| High boiling point solvent (Oil-2) | 0.6 |
| Gelatin | 1.3 |

Fourth layer (High-sensitivity red-sensitive silver halide emulsion layer)

| | |
|---|---|
| AgBrI spectrally sensitized by red sensitizing dyes (S-1 and S-2) (AgI: 2 mole %, average grain size: 0.6 µm) | 0.8 |
| Coupler (C-1) | 0.2 mole |
| High boiling point solvent (Oil-2) | 1.2 |
| Gelatin | 1.8 |

Fifth layer (Intermediate layer)

| | |
|---|---|
| 2,5-di-t-octylhydroquinone | 0.1 |
| High boiling point solvent (Oil-1) | 0.2 |
| Gelatin | 0.9 |

Sixth layer (Low-sensitivity green-sensitive silver halide emulsion layer)

| | |
|---|---|
| AgBrI spectrally sensitized by green sensitizing dyes (S-3 and S-4) (AgI: 4 mole %, average grain size: 0.25 μm) | 0.6 |
| Coupler (C-2) | 0.04 mole |
| Coupler (C-3) | 0.01 mole |
| High boiling point solvent (Oil-3) | 0.5 |
| Gelatin | 1.4 |

Seventh layer (High-sensitivity green-sensitive silver halide emulsion layer)

| | |
|---|---|
| AgBrI spectrally sensitized by green sensitizing dyes (S-3 and S-4) (AgI: 2 mole %, average grain size: 0.6 μm) | 0.9 |
| Coupler (C-2) | 0.10 mole |
| Coupler (C-3) | 0.02 mole |
| High boiling point solvent (Oil-3) | 1.0 |
| Gelatin | 1.5 |

Eighth layer (Intermediate layer)

the same layer as the fifth layer

Ninth layer (Yellow filter layer)

| | |
|---|---|
| Yellow colloidal silver | 0.1 |
| Gelatin | 0.9 |
| 2,5-di-t-octylhydroquinone | 0.1 |
| High boiling point solvent (Oil-1) | 0.2 |

Tenth layer (Low-sensitivity blue-sensitive silver halide emulsion layer)

| | |
|---|---|
| AgBrI spectrally sensitized by blue sensitizing dye (S-5) (AgI: 4 mole %, average grain size: 0.35 μm) | 0.6 |
| Coupler (C-4) | 0.3 mole |
| High boiling point solvent (Oil-3) | 0.6 |
| Gelatin | 1.3 |

Eleventh layer (High-sensitivity blue-sensitive silver halide emulsion layer)

| | |
|---|---|
| AgBrI spectrally sensitized by blue sensitizing dye (S-5) (AgI: 2 mole %, average grain size: 0.9 μm) | 0.9 |
| Coupler (C-4) | 0.5 mole |
| High boiling point solvent (Oil-3) | 1.4 |
| Gelatin | 2.1 |

Twelfth layer (First protective layer)

| | |
|---|---|
| UV absorber (U-1) | 0.3 |
| UV absorber (U-2) | 0.4 |
| High boiling point solvent (Oil-3) | 0.6 |
| Gelatin | 1.2 |
| 2,5-di-t-octylhydroquinone | 0.1 |

Thirteenth layer (Second protective layer)

| | |
|---|---|
| Non-light-sensitive fine grain silver halide emulsion comprising silver iodobromide having an average grain size ( r ) of 0.08 μm and containing 1 mole % of silver iodide amount of silver | 0.3 |
| Polymethyl methacrylate grain (diameter: 1.5 μm) | 0.15 |
| Surfactant-1 | 0.004 |
| Gelatin | 0.7 |

In the respective layers, in addition to the above components, Gelatin hardener-1, a surfactant and Antifungal agent-1 were added. As a solvent of the couplers, tricresyl phosphate was used.

UV absorber U-1

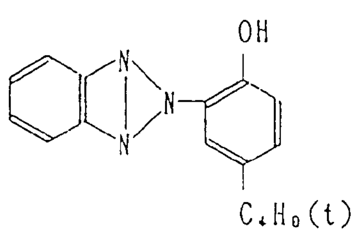

UV absorber U-2

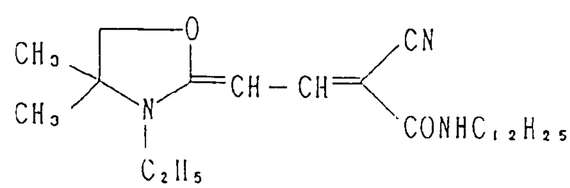

Sensitizing dye S-1

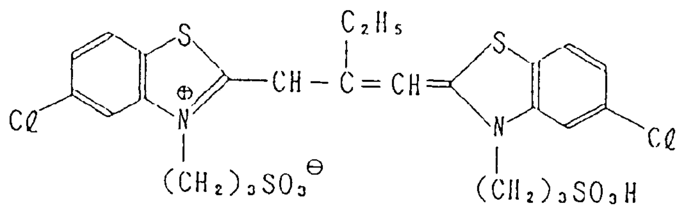

Sensitizing dye S-2

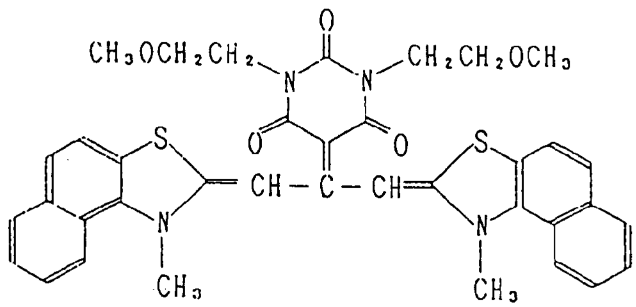

Sensitizing dye S-3

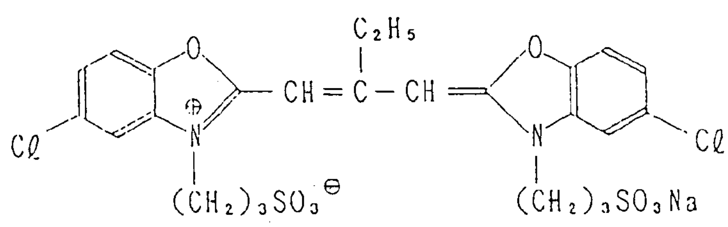

Sensitizing dye S-4

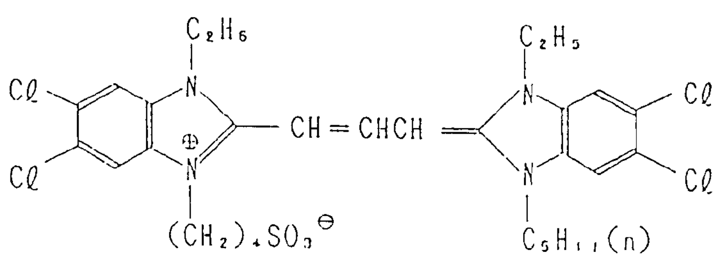

Sensitizing dye S-5

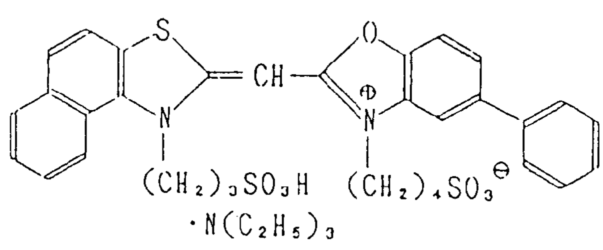

Coupler C-1

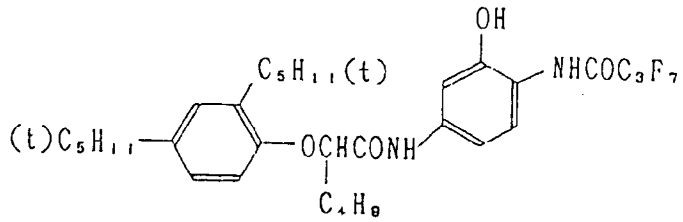

Coupler C-2

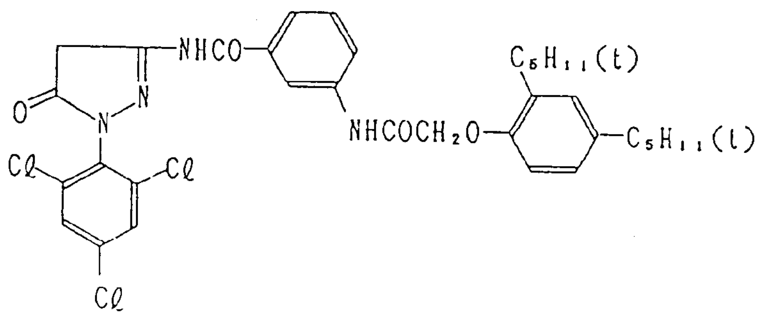

Coupler C-3

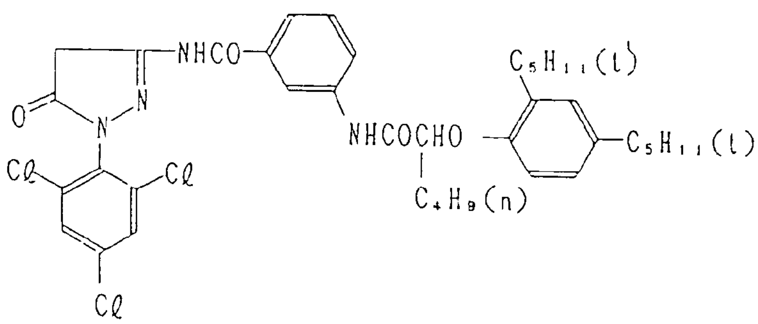

Coupler C-4

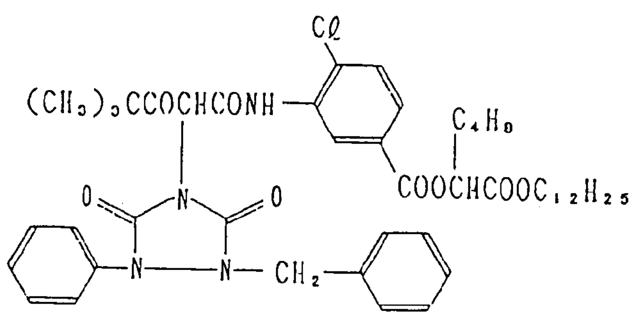

Gelatin hardener-1

$$CH_2=CHSO_2CH_2OCH_2SO_2CH=CH_2$$

Antifungal agent-1

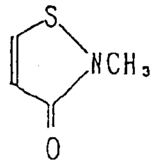

,

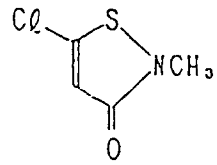

Surfactant-1

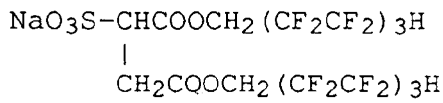

Oil-1

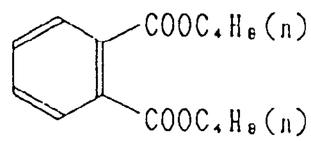

Oil-2

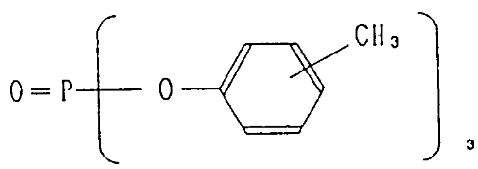

Oil-3

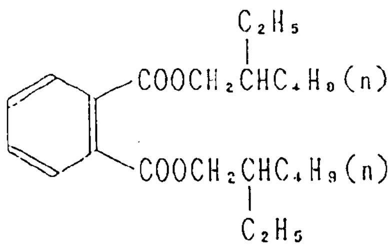

In the thirteenth layer (second protective layer) of Sample 4-1, the compounds of the present invention were added in an amount of 0.01 g/m$^2$, respectively, to prepare samples shown in Table 5, and the following evaluations were conducted.

(Fog)

After the unexposed samples were stored at 55 °C for 20 days, the processing was carried out according to the following processing steps. The increase of the maximum blue density (Δ Dmax) was shown by a relative value when the value of Sample 4-1 was defined as 100.

(Processing steps)

| Step | Processing time | Processing temperature |
|---|---|---|
| First development | 6 min | 38 °C |
| Washing | 2 min | 38 °C |
| Reversing | 2 min | 38 °C |
| Color development | 6 min | 38 °C |
| Adjustment | 2 min | 38 °C |
| Bleaching | 6 min | 38 °C |
| Fixing | 4 min | 38 °C |
| Washing | 4 min | 38 °C |
| Stabilizing | 1 min | normal temperature |
| Drying | | |

The processing solutions used in the above processing steps had the following compositions.

(First developing solution)

| | |
|---|---|
| Sodium tetrapolyphosphate | 2 g |
| Sodium sulfite | 20 g |
| Hydroquinone·monosulfonate | 30 g |
| Sodium carbonate (monohydrate) | 30 g |
| 1-Phenyl-4-methyl-4-hydroxymethyl-3-pyrazolidone | 2 g |
| Potassium bromide | 2.5 g |
| Potassium thiocyanate | 1.2 g |
| Potassium iodide (0.1 % solution) | 2 ml |

made up to 1000 ml with addition of water.

(Reversing solution)

| | |
|---|---|
| Nitrilotrimethylenephosphonic acid·hexa-sodium salt | 3 g |
| Stannous chloride (dihydrate) | 1 g |
| p-Aminophenol | 0.1 g |
| Sodium hydroxide | 8 g |
| Glacial acetic acid | 15 ml |

made up to 1000 ml with addition of water.

(Color developing solution)

| | |
|---|---|
| Sodium tetrapolyphosphate | 3 g |
| Sodium sulfite | 7 g |
| Sodium tertiary phosphate (dihydrate) | 36 g |
| Potassium bromide | 1 g |
| Potassium iodide (0.1 % solution) | 90 ml |
| Sodium hydroxide | 3 g |
| Citrazinic acid | 1.5 g |
| N-ethyl-N-β-methanesulfonamidoethyl-3-methyl-4-aminoaniline·sulfate | 11 g |
| 2,2-Ethylenedithiodiethanol | 1 g |

made up to 1000 ml with addition of water.

(Adjusting solution)

| | |
|---|---|
| Sodium sulfite | 12 g |
| Sodium ethylenediaminetetraacetate (dihydrate) | 8 g |
| Thioglycerin | 0.4 ml |
| Glacial acetic acid | 3 ml |

made up to 1000 ml with addition of water.

(Bleaching solution)

| | |
|---|---|
| Sodium ethylenediaminetetraacetate (dihydrate) | 2 g |
| Iron (III) ammonium ethylenediamine-tetraacetate (dihydrate) | 120 g |
| Ammonium bromide | 100 g |

made up to 1000 ml with addition of water.

(Fixing solution)

| | |
|---|---|
| Ammonium thiosulfate | 80 g |
| Sodium sulfite | 5 g |
| Sodium bisulfite | 5 g |

made up to 1000 ml with addition of water.

(Stabilizing solution)

| | |
|---|---|
| Formalin (37 % by weight) | 5 ml |
| Konidax (trade name, produced by Konica Corporation) | 5 ml |

made up to 1000 ml with addition of water.

Table 5

| No. | Dye | Δ Dmax | Remarks |
|---|---|---|---|
| 4-1 | Comparative dye A | 75 | Comparative |
| 4-2 | Comparative dye B | 61 | Comparative |
| 4-3 | Comparative dye C | 65 | Comparative |
| 4-4 | Comparative dye D | 76 | Comparative |
| 4-5 | Comparative dye E | 78 | Comparative |
| 4-6 | Comparative dye F | 75 | Comparative |
| 4-7 | Comparative dye G | 68 | Comparative |
| 4-8 | Comparative dye H | 65 | Comparative |
| 4-9 | Comparative dye I | 67 | Comparative |
| 4-10 | Comparative dye J | 69 | Comparative |
| 4-11 | Comparative dye K | 63 | Comparative |
| 4-12 | Comparative dye L | 65 | Comparative |
| 4-13 | Comparative dye M | 73 | Comparative |
| 4-14 | - | 100 | Comparative |
| 4-15 | Exemplary compound 1 | 100 | Present invention |
| 4-16 | Exemplary compound 2 | 100 | Present invention |
| 4-17 | Exemplary compound 3 | 100 | Present invention |
| 4-18 | Exemplary compound 6 | 100 | Present invention |
| 4-19 | Exemplary compound 7 | 99 | Present invention |
| 4-20 | Exemplary compound 10 | 98 | Present invention |
| 4-21 | Exemplary compound 12 | 99 | Present invention |
| 4-22 | Exemplary compound 15 | 100 | Present invention |
| 4-23 | Exemplary compound 19 | 98 | Present invention |
| 4-24 | Exemplary compound 24 | 98 | Present invention |
| 4-25 | Exemplary compound 25 | 100 | Present invention |
| 4-26 | Exemplary compound 32 | 98 | Present invention |
| 4-27 | Exemplary compound 33 | 98 | Present invention |
| 4-28 | Exemplary compound 36 | 97 | Present invention |
| 4-29 | Exemplary compound 37 | 98 | Present invention |
| 4-30 | Exemplary compound 51 | 98 | Present invention |

Table 5 (cont'd)

| No. | Dye | Δ Dmax | Remarks |
|---|---|---|---|
| 4-31 | Exemplary compound 65 | 100 | Present invention |
| 4-32 | Exemplary compound 74 | 100 | Present invention |

As can be clearly seen from Table 5, the dyes of the present invention exert almost no influence on photographic emulsion properties. That is, the dyes are inactive to the photographic emulsions.

In the present invention, since the water-soluble oxonol dye represented by the formula (I) is contained as a light absorbing dye, the resulting light-sensitive silver halide photographic material has good spectral absorption characteristic without exerting bad influence in a light-sensitive photographic material (inactive to an emulsion), and also has an excellent effect that the dye is easily decolorized and/or flown out during photographic development processing whereby stain after processing is extremely small.

## Claims

1. A light-sensitive silver halide photographic material which comprises containing a compound represented by the following formula (I):

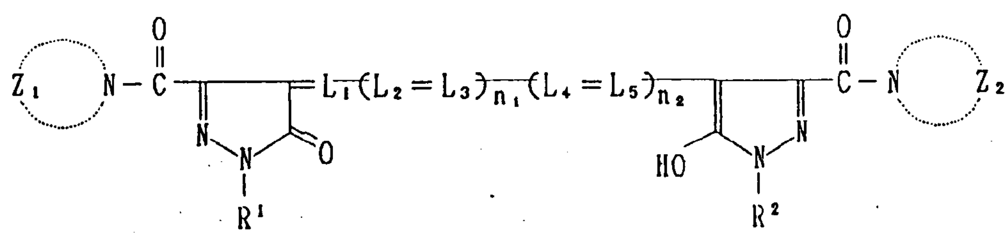

(I)

wherein $R^1$ and $R^2$ each represent hydrogen atom, an alkyl group, an aryl group, an alkenyl group or a heterocyclic group; $Z_1$ and $Z_2$ each represent a group of non-metallic atoms for forming an aromatic heterocyclic ring; $L_1$ to $L_5$ each represent a methine group; and $n_1$ and $n_2$ each represent an integer of 0, 1 or 2.

2. The material of Claim 1 wherein $R^1$ and/or $R^2$ is an alkyl group selected from the group consisting of methyl group, ethyl group, propyl group, isopropyl group, n-butyl group, tertiary butyl group, cyclopentyl group and cyclohexyl group.

3. The material of Claim 1 wherein $R^1$ and/or $R^2$ is a phenyl group selected from the group consisting of phenyl group, 2-methoxyphenyl group, 4-nitrophenyl group, 3-chlorophenyl group, 4-aminophenyl group, 4-hydroxyphenyl group, 4-methanesulfonylphenyl group, 4-sulfophenyl group, 3-sulfophenyl group, 2-sulfophenyl group, 2-methyl-4-sulfophenyl group, 2-chloro-4-sulfophenyl group, 4-chloro-3-sulfophenyl group, 2-chloro-5-sulfophenyl group, 2-methoxy-5-sulfophenyl group, 2-hydroxy-4-sulfophenyl group, 2,5-dichloro-4-sulfonyl group, 2,6-diethyl-4-sulfophenyl group, 2,5-disulfophenyl group, 3,5-disulfophenyl group, 2,4-disulfophenyl group, 4-phenoxy-3-sulfophenyl group, 2-chloro-6-methyl-4-sulfophenyl group, 3-carboxy-2-hydroxy-5-sulfophenyl group, 4-carboxyphenyl group, 2,5-dicarboxyphenyl group, 3,5-dicarboxyphenyl group, 2,4-dicarboxyphenyl group, 3,6-disulfo-α-naphthyl group, 8-hydroxy-3,6-disulfo-α-naphthyl group, 5-hydroxy-7-sulfo-β-naphthyl group and 6,8-disulfo-β-naphthyl group.

4. The material of Claim 1 wherein $R^1$ and/or $R^2$ is an alkenyl group selected from the group consisting of vinyl group and allyl group.

5. The material of Claim 1 wherein $R^1$ and/or $R^2$ is a heterocyclic group selected from the group consisting of a pyridyl group, an oxazolyl group, a thiazolyl group, an imidazolyl group, a furyl group, a pyrrolyl group,

a thienyl group, a pyrazinyl group, a pyrimidinyl group, a pyridazinyl group, a purinyl group, an isoxazolinyl group, a selenazolyl group, a sulforanyl group, a piperidinyl group, a pyrazolyl group and a tetrazolyl group.

**6.** The material of Claim 1 wherein said aromatic heterocyclic ring is a pyrrole ring, an imidazole ring, a pyrazol ring, an isoindole ring, an indole ring, an indazole ring, a purine ring, a carbazole ring, a carboline ring, a perimidine ring, a phenothiazine ring, a phenoxazine ring, a triazole ring, a benzimidazole ring or a benztriazole ring

**7.** The material of Claim 1 wherein said compound is at least one selected from the group consisting of:

3-position 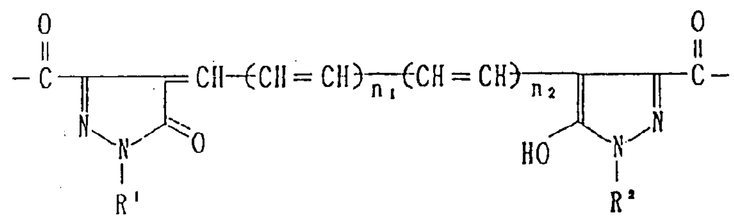 3'-position

| No. | 3-position | 3'-position | $R^1$ | $R^2$ | $n_1$ | $n_2$ |
|---|---|---|---|---|---|---|
| 1 | 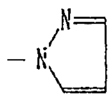 | 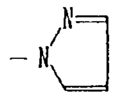 | 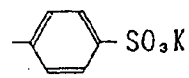 | 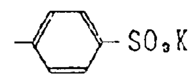 | 0 | 0 |
| 2 | 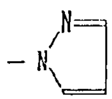 | 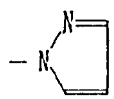 | 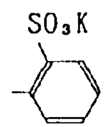 | 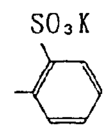 | 1 | 0 |
| 3 | 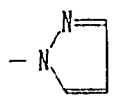 | 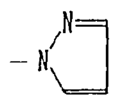 | 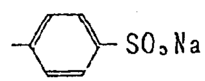 | 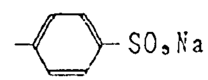 | 1 | 1 |
| 4 | 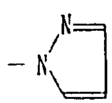 | 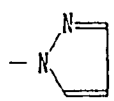 | 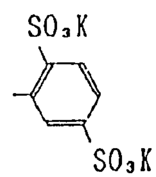 | 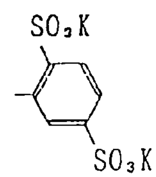 | 1 | 1 |

| No. | 3-position | 3'-position | $R^1$ | $R^2$ | $n_1$ | $n_2$ |
|---|---|---|---|---|---|---|
| 5 | 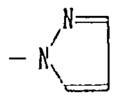 | 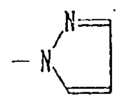 | 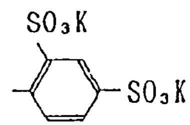 | 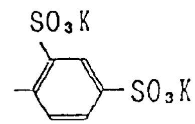 | 1 | 0 |
| 6 | 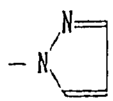 | 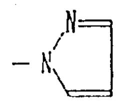 | 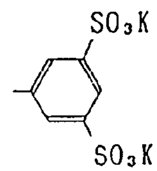 | 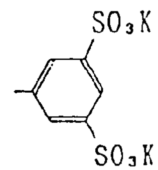 | 0 | 0 |
| 7 | 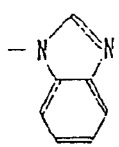 | 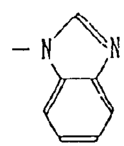 | 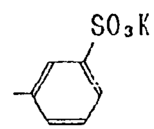 | 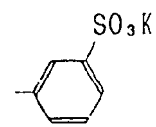 | 0 | 0 |
| 8 | 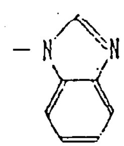 | 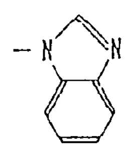 | 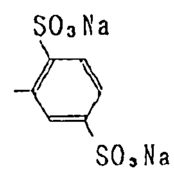 | 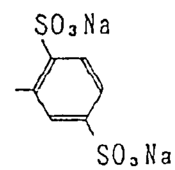 | 0 | 0 |

| No. | 3-position | 3'-position | $R^1$ | $R^2$ | $n_1$ | $n_2$ |
|---|---|---|---|---|---|---|
| 9 | 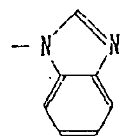 | 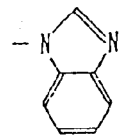 | 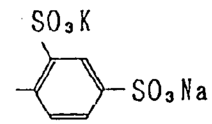 | 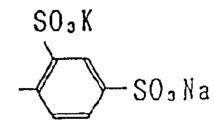 | 1 | 0 |
| 10 | 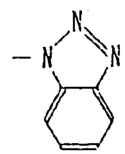 | 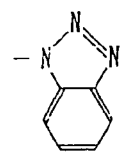 | 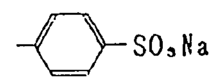 | 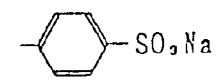 | 1 | 0 |
| 11 | 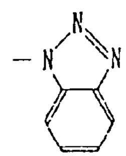 | 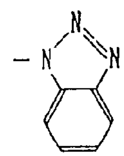 | 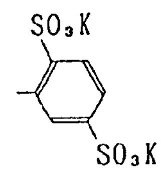 | 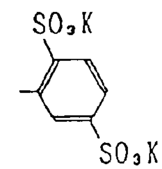 | 1 | 1 |
| 12 | 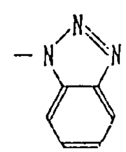 | 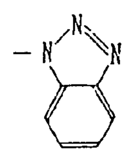 | 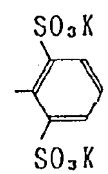 | 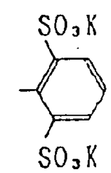 | 0 | 0 |

| No. | 3-position | 3'-position | $R^1$ | $R^2$ | $n_1$ | $n_2$ |
|---|---|---|---|---|---|---|
| 13 | 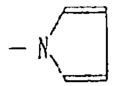 | 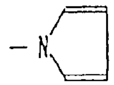 | 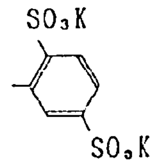 | 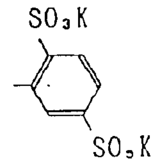 | 1 | 1 |
| 14 | 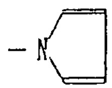 | 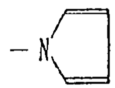 | 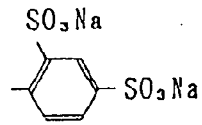 | 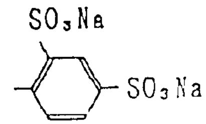 | 1 | 0 |
| 15 | 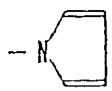 | 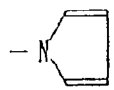 | 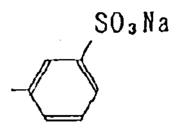 | 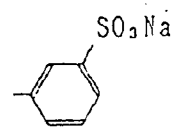 | 0 | 0 |
| 16 | 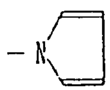 | 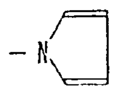 | 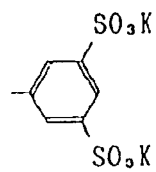 | 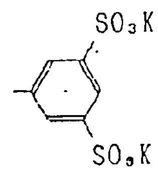 | 1 | 1 |

| No. | 3-position | 3'-position | $R^1$ | $R^2$ | $n_1$ | $n_2$ |
|---|---|---|---|---|---|---|
| 17 | 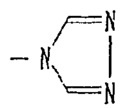 | 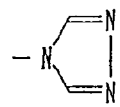 | 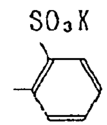 | 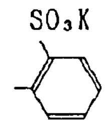 | 0 | 0 |
| 18 | 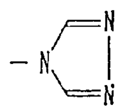 | 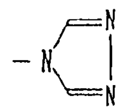 | 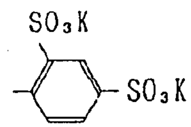 | 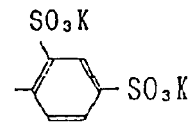 | 1 | 1 |
| 19 | 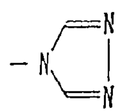 | 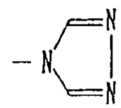 | 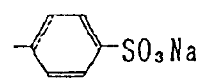 | 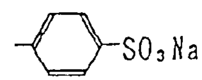 | 2 | 1 |
| 20 | 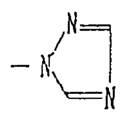 | 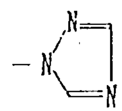 | 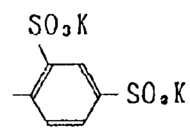 | 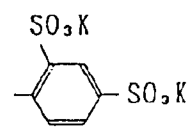 | 1 | 0 |
| 21 | 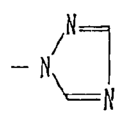 | 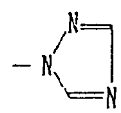 | 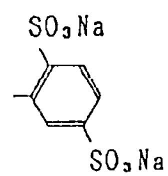 | 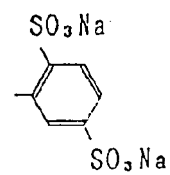 | 1 | 1 |

| No. | 3-position | 3'-position | $R^1$ | $R^2$ | $n_1$ | $n_2$ |
|---|---|---|---|---|---|---|
| 22 | 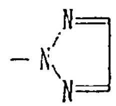 | 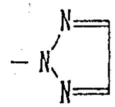 | 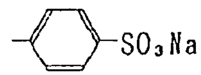 | 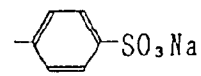 | 1 | 0 |
| 23 | 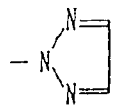 | 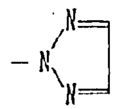 | 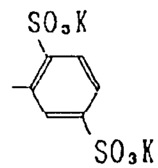 | 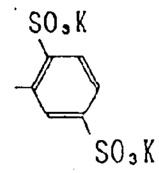 | 1 | 1 |
| 24 | 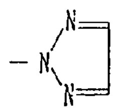 | 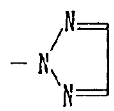 | 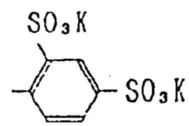 | 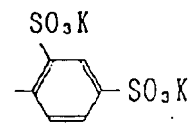 | 1 | 2 |
| 25 | 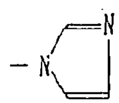 | 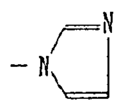 | 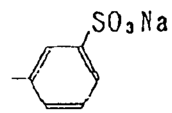 | 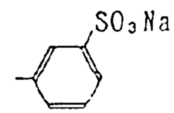 | 0 | 0 |
| 26 | 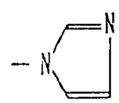 | 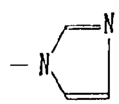 | 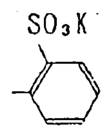 | 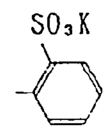 | 1 | 0 |

| No. | 3-position | 3'-position | R¹ | R² | $n_1$ | $n_2$ |
|---|---|---|---|---|---|---|
| 27 | 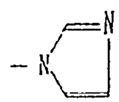 | 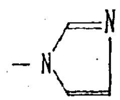 | 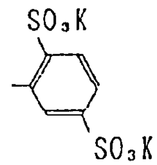 | 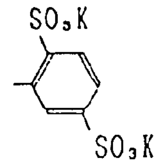 | 1 | 1 |
| 28 | 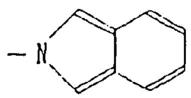 | 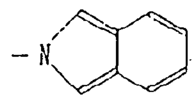 | 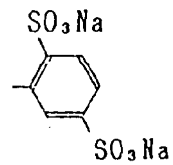 | 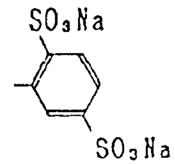 | 1 | 0 |
| 29 | 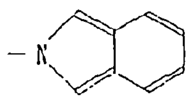 | 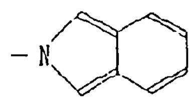 | 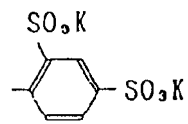 | 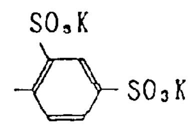 | 1 | 1 |
| 30 | 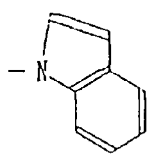 | 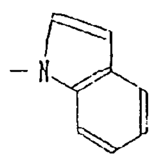 | 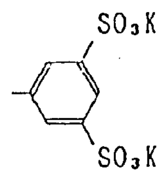 | 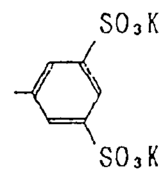 | 1 | 0 |

| No. | 3-position | 3'-position | $R^1$ | $R^2$ | $n_1$ | $n_2$ |
|---|---|---|---|---|---|---|
| 31 | 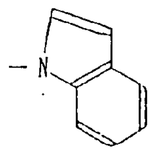 | 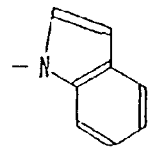 | 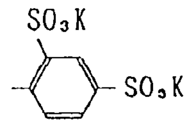 | 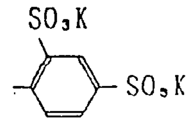 | 1 | 1 |
| 32 | 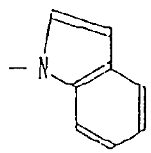 | 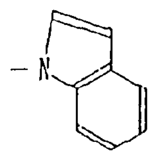 | 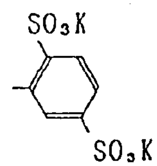 | 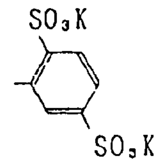 | 0 | 0 |
| 33 | 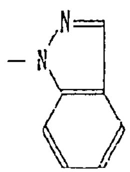 | 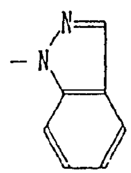 | 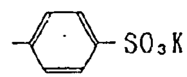 | 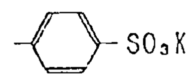 | 0 | 0 |
| 34 | 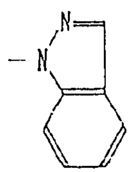 | 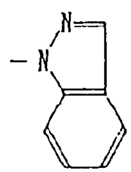 | 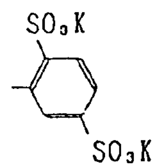 | 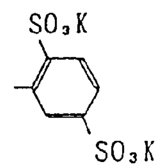 | 1 | 0 |

| No. | 3-position | 3'-position | $R^1$ | $R^2$ | $n_1$ | $n_2$ |
|---|---|---|---|---|---|---|
| 35 | 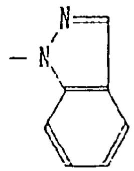 | 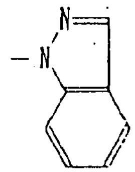 | 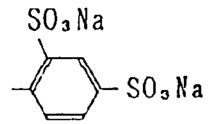 | 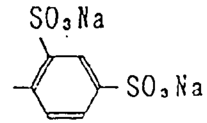 | 1 | 1 |
| 36 | 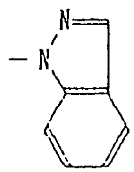 | 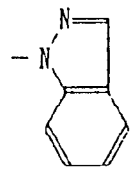 | 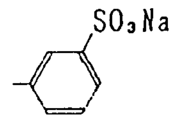 | 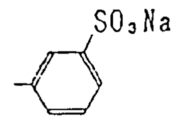 | 2 | 1 |
| 37 | 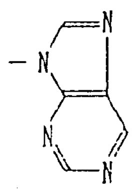 | 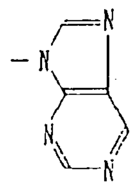 | 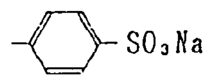 | 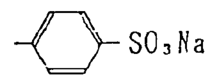 | 0 | 0 |
| 38 | 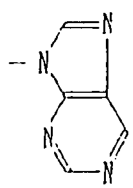 | 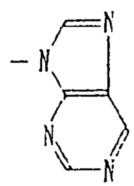 | 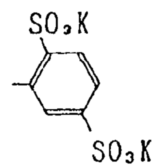 | 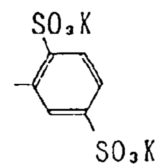 | 1 | 0 |

| No. | 3-position | 3'-position | $R^1$ | $R^2$ | $n_1$ | $n_2$ |
|---|---|---|---|---|---|---|
| 39 | 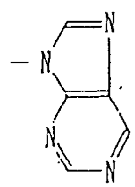 | 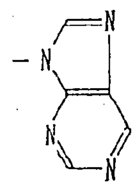 | 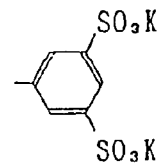 | 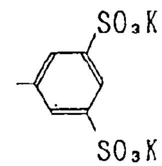 | 1 | 1 |
| 40 | 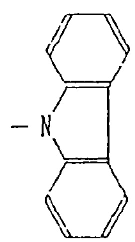 | 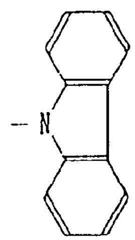 | 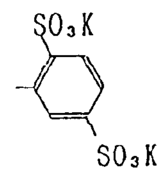 | 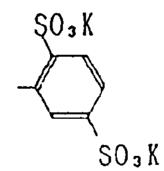 | 1 | 0 |
| 41 | 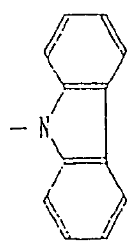 | 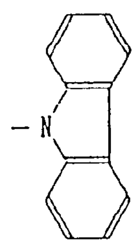 | 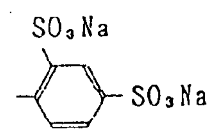 | 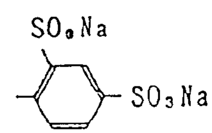 | 1 | 1 |

| No. | 3-position | 3'-position | $R^1$ | $R^2$ | $n_1$ | $n_2$ |
|---|---|---|---|---|---|---|
| 42 | 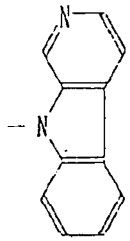 | 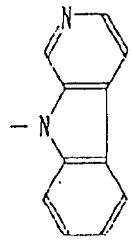 | 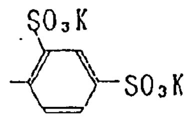 | 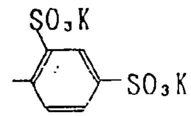 | 1 | 0 |
| 43 | 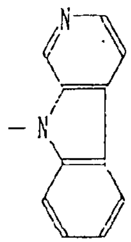 | 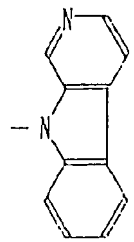 | 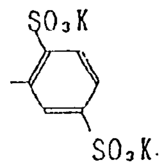 | 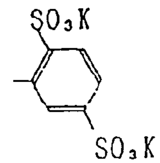 | 1 | 1 |
| 44 | 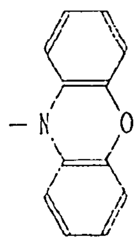 | 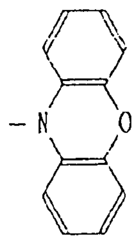 | 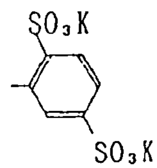 | 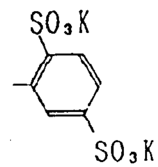 | 1 | 0 |

| No. | 3-position | 3'-position | $R^1$ | $R^2$ | $n_1$ | $n_2$ |
|---|---|---|---|---|---|---|
| 45 | 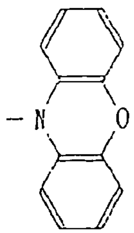 | 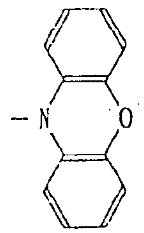 | 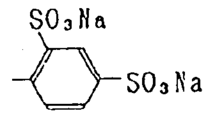 | 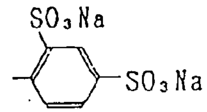 | 1 | 1 |
| 46 | 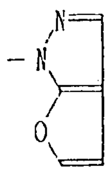 | 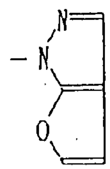 | 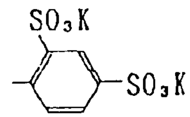 | 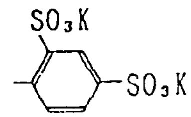 | 1 | 0 |
| 47 | 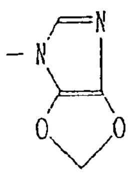 | 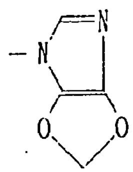 | 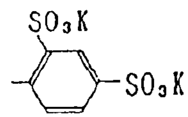 | 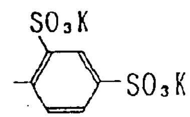 | 1 | 0 |
| 48 | 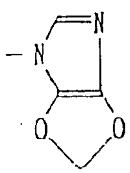 | 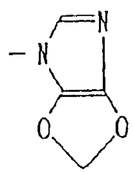 | 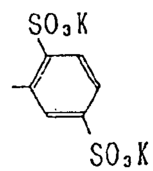 | 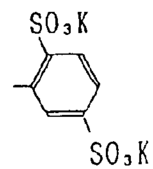 | 1 | 0 |

| No. | 3-position | 3'-position | $R^1$ | $R^2$ | $n_1$ | $n_2$ |
|---|---|---|---|---|---|---|
| 49 | 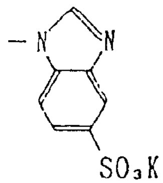 | 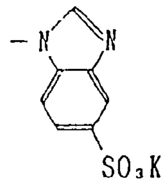 | $-CH_3$ | $-CH_3$ | 1 | 0 |
| 50 | 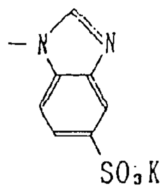 | 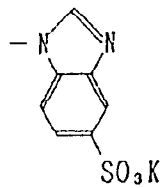 | 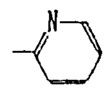 | 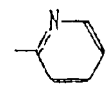 | 1 | 1 |
| 51 | 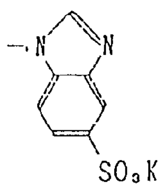 | 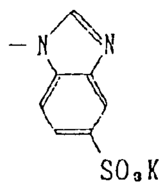 | $-CH=CH_2$ | $-CH=CH_2$ | 0 | 0 |
| 52 | 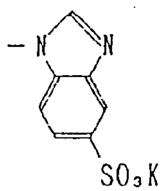 | 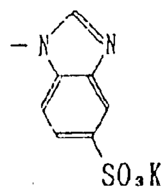 | 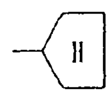 | 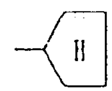 | 1 | 0 |

| No. | 3-position | 3'-position | $R^1$ | $R^2$ | $n_1$ | $n_2$ |
|---|---|---|---|---|---|---|
| 53 | 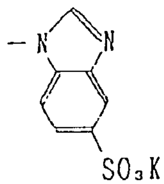 | 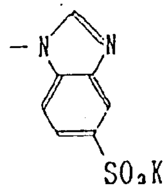 | $-CH_2-CH=CH_2$ | $-CH_2-CH=CH_2$ | 1 | 0 |
| 54 | 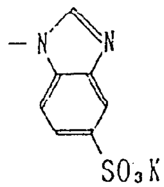 | 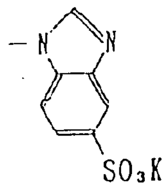 | 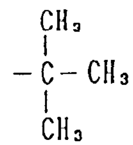 | 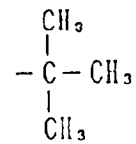 | 1 | 1 |
| 55 | 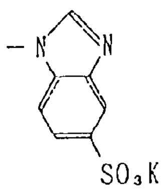 | 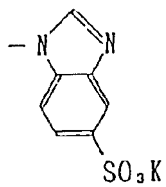 | 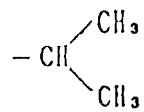 | 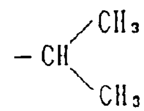 | 1 | 0 |
| 56 | 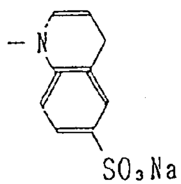 | 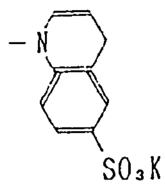 | $-CH_2CH_2COOH$ | $-CH_2CH_2COOH$ | 1 | 1 |

| No. | 3-position | 3'-position | R¹ | R² | $n_1$ | $n_2$ |
|---|---|---|---|---|---|---|
| 57 | 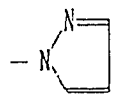 | 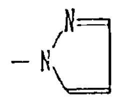 | $-CH_2CH_2SO_3K$ | $-CH_2CH_2SO_3K$ | 1 | 1 |
| 58 | 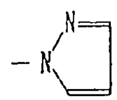 | 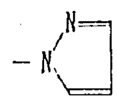 | 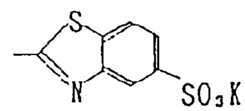 | 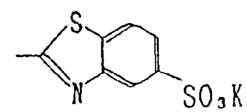 | 1 | 0 |
| 59 | 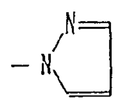 | 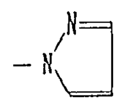 | 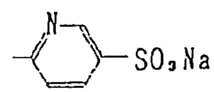 | 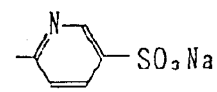 | 1 | 1 |
| 60 | 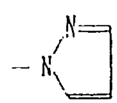 | 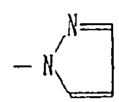 | 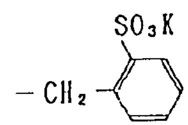 | 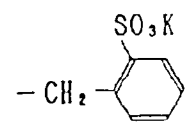 | 1 | 0 |
| 61 | 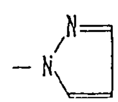 | 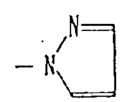 | 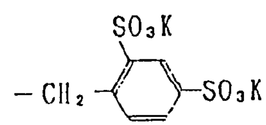 | 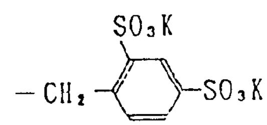 | 1 | 1 |
| 62 | 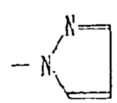 | 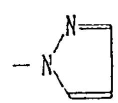 | 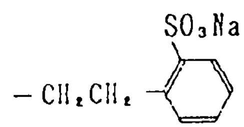 | 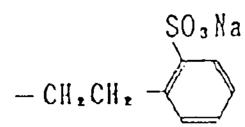 | 1 | 0 |

| No. | 3-position | 3'-position | $R^1$ | $R^2$ | $n_1$ | $n_2$ |
|---|---|---|---|---|---|---|
| 63 | 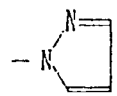 | 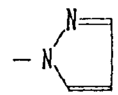 | 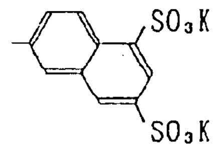 | 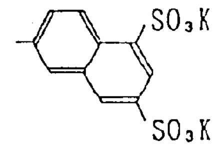 | 1 | 0 |
| 64 | 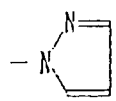 | 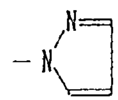 | 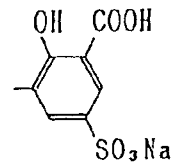 | 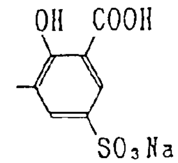 | 1 | 1 |
| 65 | 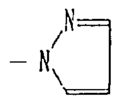 | 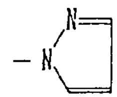 | 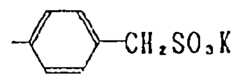 | 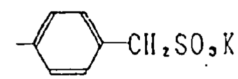 | 0 | 0 |
| 66 | 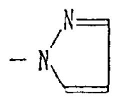 | 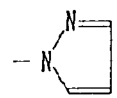 | 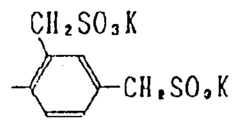 | 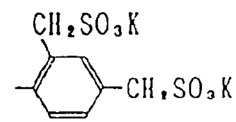 | 1 | 1 |
| 67 | 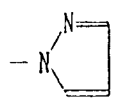 | 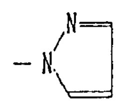 | 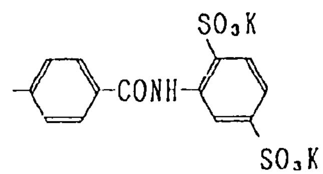 | 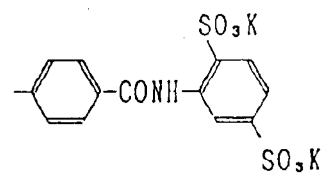 | 1 | 0 |

| No. | 3-position | 3'-position | $R^1$ | $R^2$ | $n_1$ | $n_2$ |
|---|---|---|---|---|---|---|
| 68 | 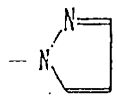 | 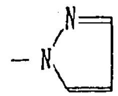 | 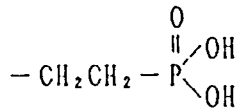 | 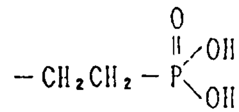 | 1 | 0 |
| 69 | 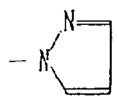 | 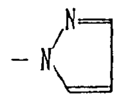 | 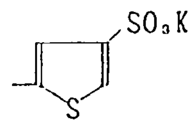 | 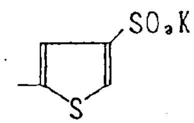 | 1 | 1 |
| 70 | 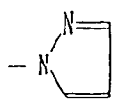 | 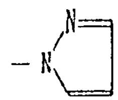 | 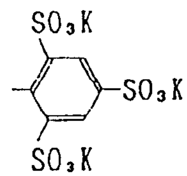 | 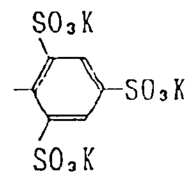 | 1 | 0 |
| 71 | 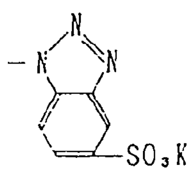 | 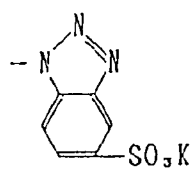 | $-H$ | $-H$ | 1 | 0 |
| 72 | 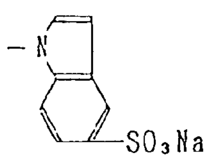 | 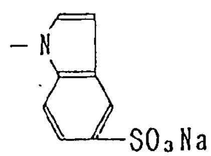 | $-H$ | $-H$ | 1 | 0 |

| No. | 3-position | 3'-position | $R^1$ | $R^2$ | $n_1$ | $n_2$ |
|---|---|---|---|---|---|---|
| 73 | 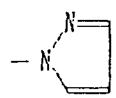 | 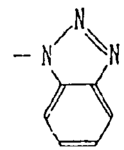 | 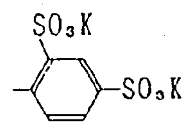 | 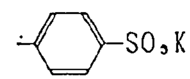 | 1 | 1 |
| 74 | 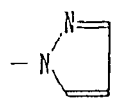 | 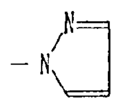 | 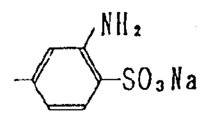 | 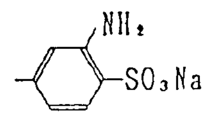 | 1 | 0 |
| 75 | 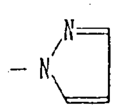 | 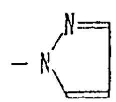 | 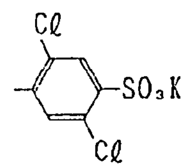 | 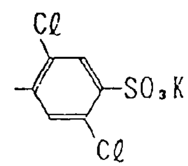 | 1 | 1 |
| 76 | 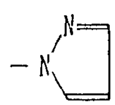 | 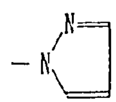 | 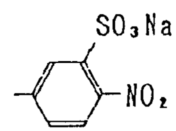 | 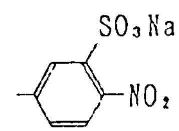 | 1 | 0 |

| No. | 3-position | 3'-position | $R^1$ | $R^2$ | $n_1$ | $n_2$ |
|---|---|---|---|---|---|---|
| 77 | 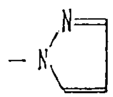 | 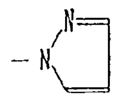 | 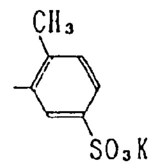 | 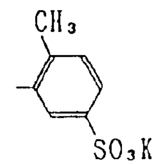 | 1 | 0 |
| 78 | 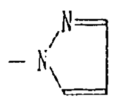 | 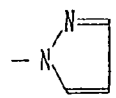 | 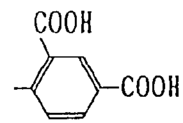 | 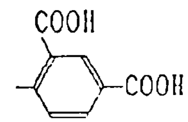 | 1 | 1 |

79

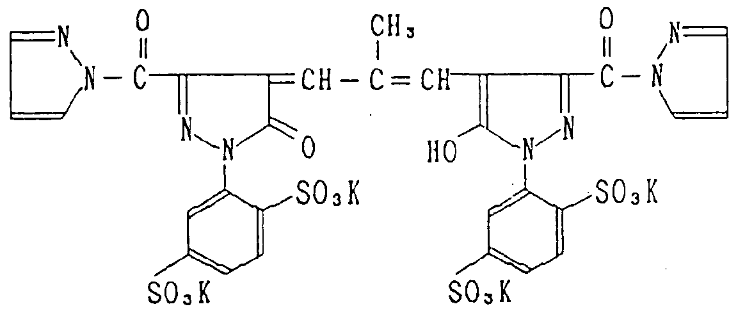

80

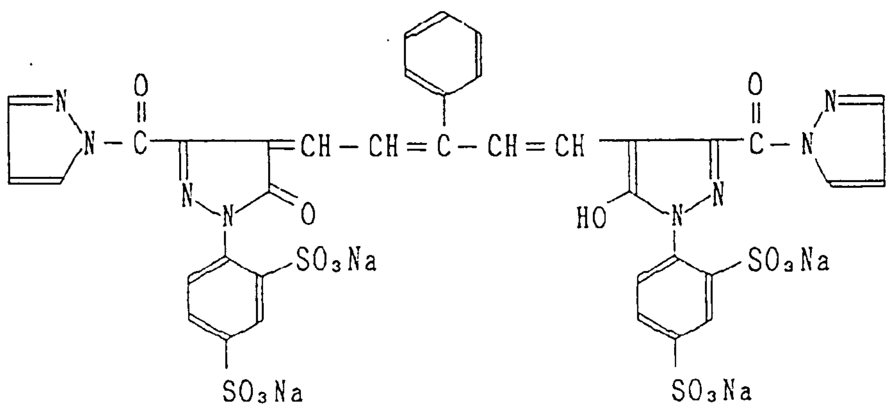

81

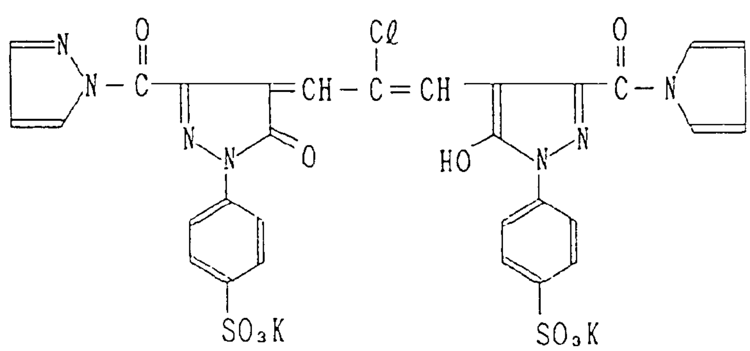

82

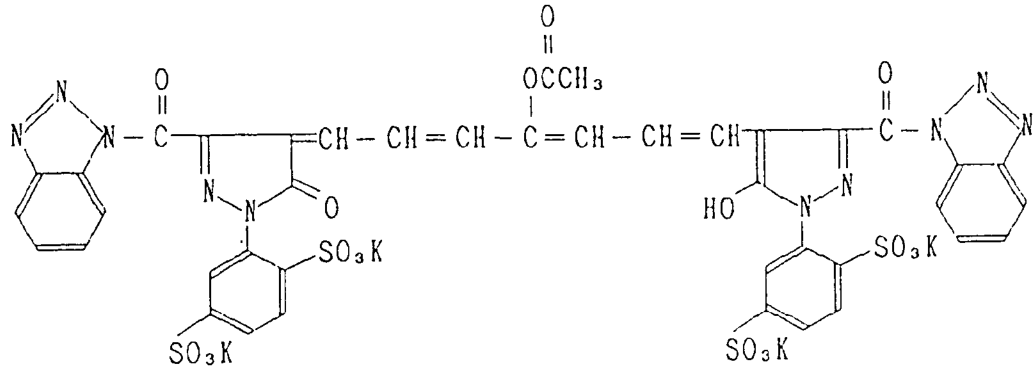

8. The material of Claim 1 wherein said compound is contained in a light-sensitive silver halide photographic meulsion layer or a non-light-sensitive hydrophilic colloid layer.

9. The material of Claim 8 wherein an amount of said compound is 1 to 100 mg per $m^2$ of the light-sensitve material.

European Patent Office

# EUROPEAN SEARCH REPORT

Application Number

EP 91 30 8329

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 330 948 (AGFA-GEVAERT AKTIENGESELLSCHAFT) * page 3, line 25 - line 26 * | 1-9 | G03C1/83 //C09B23/00 |
| A | EP-A-0 361 949 (KONICA CORPORATION) *Page 16, structures 33-35* | 1-9 | |
| A | GB-A-1 338 799 (VEB FILMFABRIK WOLFEN) * the whole document * | 1-9 | |

TECHNICAL FIELDS SEARCHED (Int. Cl.5 )

G03C
C09B

The present search report has been drawn up for all claims

| Place of search | Date of completion of the search | Examiner |
|---|---|---|
| THE HAGUE | 20 DECEMBER 1991 | BOLGER W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)